# EUROPEAN PATENT APPLICATION

(11) **EP 4 787 624 A1**
(43) Date of publication of application: **05.08.2026**
(21) Application number: 24886331.8
(22) Date of filing: 01.11.2024
(51) Int. Cl.: H01Q 25/00, H01Q 5/335, H01Q 1/24, H04M 1/02, H04B 10/118

(54) **ELECTRONIC DEVICE INCLUDING ANTENNA**

(30) Priority: 02.11.2023 KR 20230150176; 20.12.2023 KR 20230187257
(71) Applicant: Samsung Electronics Co., Ltd., Suwon-si, Gyeonggi-do 16677 (KR)
(72) Inventor: PARK, Seongjin, Suwon-si, Gyeonggi-do 16677 (KR); KIM, Hosaeng, Suwon-si, Gyeonggi-do 16677 (KR); YUN, Sumin, Suwon-si, Gyeonggi-do 16677 (KR); LEE, Hyungjoo, Suwon-si, Gyeonggi-do 16677 (KR)
(74) Representative: HGF
(86) International application number: PCT/KR2024/017012
(87) International publication number: WO 2025/095660

(57) **Abstract**

Various embodiments of the present disclosure provide an electronic device, and the electronic device may include: a front plate forming at least a portion of a front surface of the electronic device; a rear plate forming at least a portion of a rear surface of the electronic device; a side forming at least a portion of a side surface of the electronic device; an antenna structure including a first side metal included in the side and a conductive pattern electrically connected to the first side metal; and a wireless communication circuit configured to transmit and/or receive a signal of a selected or designated first frequency band through the antenna structure, wherein the first side metal radiates a first polarized wave, and the conductive pattern radiates a second polarized wave different from the first polarized wave.

## Description

### [Technical Field]

The present disclosure relates to an electronic device including an antenna.

### [Background Art]

An electronic device includes a plurality of antennas to support various communication technologies.

The information described above may be provided as the related art for the purpose of enhancing the understanding of the present disclosure. No assertion or determination is made with respect to the applicability of any of the above-mentioned as the prior art related to the present disclosure.

### [Disclosure of Invention]

### [Technical Problem]

As the range of available applications becomes wider, the number of antennas included in an electronic device is increasing. As an electronic device is slimming down, it is becoming difficult to design an antenna in a limited space for securing antenna radiation performance with respect to a desired frequency band or securing coverage (communication range) while reducing electromagnetic influence with various elements within the electronic device.

Various embodiments of the present disclosure provide an electronic device including an antenna for securing or improving antenna radiation performance (or radio wave transmission and reception performance) and/or coverage.

Technical problems to be solved by the present disclosure are not limited to the above-mentioned technical problems, and other technical problems, which are not mentioned above, may be understood from the following descriptions by those skilled in the art to which the present disclosure pertains.

### [Solution to Problem]

According to various embodiments of the present disclosure, an electronic device is provided, and the electronic device may comprise a front plate forming at least a portion of a front surface of the electronic device, a rear plate forming at least a portion of a rear surface of the electronic device, a side forming at least a portion of a side surface of the electronic device, an antenna structure comprising a first side metal included in the side and a conductive pattern electrically connected to the first side metal, and a wireless communication circuit configured to transmit and/or receive a signal of a selected or designated first frequency band through the antenna structure, and the first side metal may radiate a first polarized wave, and the conductive pattern may radiate a second polarized wave different from the first polarized wave.

### [Advantageous Effects of invention]

An electronic device including an antenna according to various embodiments of the present disclosure may secure or improve antenna radiation performance and/or coverage.

Other effects, which may be obtained or expected by various embodiments of the present disclosure, will be directly or implicitly disclosed in the detailed description on the embodiments of the present disclosure.

### [Brief Description of Drawings]

The above and other aspects, features, and advantages of specific embodiments of the present disclosure will become clearer from the following detailed description, which is provided together with the accompanying drawings.
FIG. 1 is a block diagram of an electronic device in a network environment according to various embodiments of the present disclosure.
FIG. 2 is a view illustrating various aspects of an electronic device according to various embodiments of the present disclosure.
FIG. 3 is an exploded perspective view of an electronic device according to various embodiments of the present disclosure.
FIG. 4 is a block diagram regarding a portion of an electronic device according to various embodiments of the present disclosure.
FIG. 5 is a block diagram regarding a portion of an electronic device according to various embodiments of the present disclosure.
FIG. 6 is a block diagram regarding a portion of an electronic device according to various embodiments of the present disclosure.
FIG. 7 is a cross-sectional view of an electronic device taken along line C-C' of FIG. 2 according to various embodiments of the present disclosure.
FIG. 8 is a cross-sectional view of an electronic device taken along line C-C' of FIG. 2 according to various embodiments of the present disclosure.
FIG. 9 is a block diagram regarding a portion of an electronic device according to various embodiments of the present disclosure.
FIG. 10 is a cross-sectional view of an electronic device taken along line C-C' of FIG. 2 according to various embodiments of the present disclosure.
FIG. 11 is a block diagram regarding a portion of an electronic device according to various embodiments of the present disclosure.
FIG. 12 is a block diagram regarding a portion of an electronic device according to various embodiments of the present disclosure.
FIG. 13 is a block diagram regarding a portion of an electronic device according to various embodiments of the present disclosure.
FIG. 14 is a view illustrating an antenna according to a first embodiment of the present disclosure, an antenna according to a second embodiment of the present disclosure, and an antenna according to a comparative example, and heat maps showing gain and axial ratio characteristics of the antennas.
FIG. 15 is a view illustrating a portion of an electronic device according to various embodiments of the present disclosure and a portion of an electronic device according to a comparative example, and heat maps showing gain and axial ratio characteristics of the electronic devices.
FIG. 16 is a view illustrating a portion of an electronic device, and heat maps showing gain and axial ratio characteristics of an antenna structure according to a relative position of a second point on a first metal with respect to a first point on the first metal, according to various embodiments of the present disclosure.
FIG. 17 is a view illustrating an antenna, and heat maps showing gain and axial ratio characteristics of the antenna according to a length of a conductive pattern, according to various embodiments of the present disclosure.
FIG. 18 is a view illustrating an antenna according to a first embodiment of the present disclosure, an antenna according to a second embodiment of the present disclosure, and an antenna according to a comparative example, and heat maps showing gain and axial ratio characteristics of the antennas.
FIG. 19 illustrates a view illustrating an antenna, heat maps showing gain and axial ratio characteristics of the antenna, and beam patterns of the antenna, according to various embodiments of the present disclosure.

### [Mode for the Invention]

Hereinafter, various embodiments of the disclosure disclosed herein will be described in greater detail with reference to the accompanying drawings.

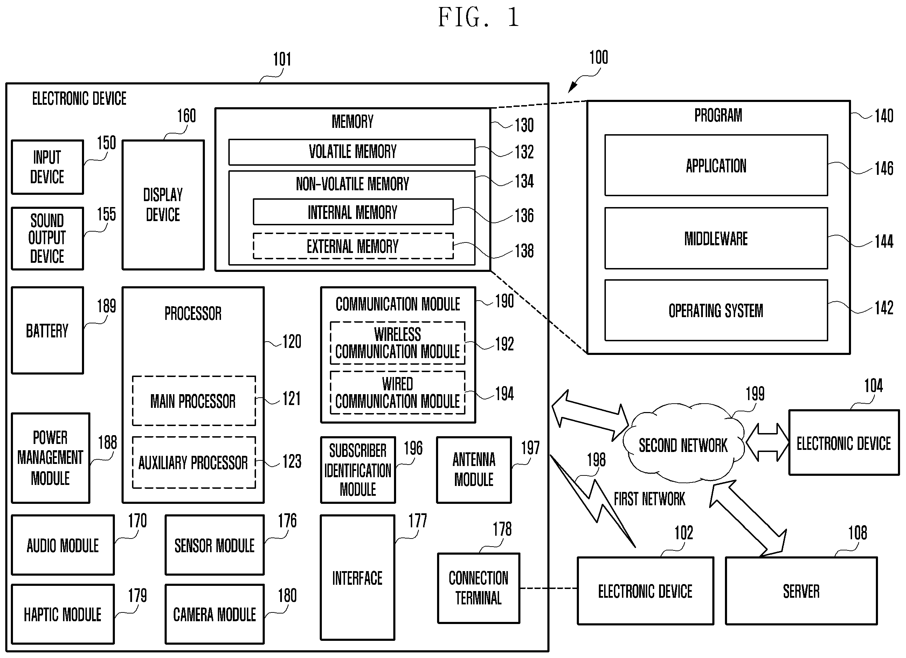

FIG. 1 is a block diagram of an electronic device 101 in a network environment 100 according to various embodiments of the disclosure.

Referring to FIG. 1, the electronic device 101 in the network environment 100 may communicate with an external electronic device 102 via a first network 198 (e.g., a short-range wireless communication network), or at least one of an external electronic device 104 or a server 108 via a second network 199 (e.g., a long-range wireless communication network). The electronic device 101 may communicate with the external electronic device 104 via the server 108. The electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, and/or an antenna module 197. In various embodiments of the disclosure, at least one (e.g., the connection terminal 178) of the components may be omitted from the electronic device 101, or one or more other components may be added in the electronic device 101. In various embodiments of the disclosure, some of the components may be implemented as single integrated circuitry. For example, the sensor module 176, the camera module 180, or the antenna module 197 may be implemented as embedded in single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may load a command or data received from another component (e.g., the sensor module 176 or the communication module 190) in a volatile memory 132, process the command or the data stored in the volatile memory 132, and store resulting data in a non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control, for example, at least some of functions or states related to at least one component (e.g., the display module 160, the sensor module 176, or the communication module 190) among the components of the electronic device 101, instead of the main processor 121 while the main processor 121 is in an inactive (e.g., a sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to various embodiments of the disclosure, the auxiliary processor 123 (e.g., a neural network processing device) may include a hardware structure specified for processing an artificial intelligence model. The artificial intelligence model may be created through machine learning. Such learning may be performed, for example, in the electronic device 101 itself on which the artificial intelligence model is performed, or may be performed through a separate server (e.g., the server 108). The learning algorithms may include, for example, supervised learning, unsupervised learning, semi-supervised learning, or reinforcement learning, but is not limited thereto. The artificial intelligence model may include a plurality of artificial neural network layers. The artificial neural network may be any of a deep neural network (DNN), a convolutional neural network (CNN), a recurrent neural network (RNN), a restricted Boltzmann machine (RBM), a deep belief network (DBN), a bidirectional recurrent DNN (BRDNN), a deep Q-network, or a combination of two or more of the above-mentioned networks, but is not limited the above-mentioned examples. In addition to the hardware structure, the artificial intelligence model may additionally or alternatively include a software structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 and/or the non-volatile memory 134.

The program 140 may be stored in the memory 130 as software, and may include, for example, an operating system (OS) 142, middleware 144, and/or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record, and the receiver may be used for incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include touch circuitry (e.g., a touch sensor) adapted to detect a touch, or sensor circuitry (e.g., a pressure sensor) adapted to measure the intensity of force incurred by the touch.

The audio module 170 may convert a sound into an electrical signal and vice versa. The audio module 170 may obtain the sound via the input module 150, or output the sound via the sound output module 155 or a headphone of an external electronic device (e.g., the external electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the external electronic device 102) directly (e.g., wiredly) or wirelessly. The interface 177 may include, for example, a high-definition multimedia interface (HDMI), a universal serial bus (USB) interface, a secure digital (SD) card interface, and/or an audio interface.

The connecting terminal 178 may include a connector via which the electronic device 101 may be physically connected with the external electronic device (e.g., the external electronic device 102). The connecting terminal 178 may include, for example, an HDMI connector, a USB connector, an SD card connector, and/or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, ISPs, or flashes.

The power management module 188 may manage power supplied to or consumed by the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, and/or a fuel cell.

The communication module 190 may support establishing a direct (e.g., wired) communication channel or a wireless communication channel between the electronic device 101 and the external electronic device (e.g., the external electronic device 102, the external electronic device 104, or the server 108) and performing communication via the established communication channel. The communication module 190 may include one or more CPs that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BLUETOOTH, wireless-fidelity (Wi-Fi) direct, or IR data association (IrDA)) or the second network 199 (e.g., a long-range communication network, such as a legacy cellular network, a 5^{th} generation (5G) network, a next generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4^{th} generation (4G) network, and next-generation communication technology, e.g., new radio (NR) access technology. The NR access technology may support high-speed transmission of high-capacity data (i.e., enhanced mobile broadband (eMBB)), minimization of terminal power and connection of multiple terminals (massive machine type communications (mMTC)), or high reliability and low latency (ultra-reliable and low-latency communications (URLLC)). The wireless communication module 192 may support a high-frequency band (e.g., a mmWave band) to achieve, for example, a high data transmission rate. The wireless communication module 192 may support various technologies for securing performance in a high-frequency band, such as beamforming, massive multiple-input and multiple-output (MIMO), full-dimensional MIMO (FD-MIMO), array antenna, analog beam-forming, or large-scale antenna. The wireless communication module 192 may support various requirements specified in the electronic device 101, an external electronic device (e.g., external the electronic device 104), or a network system (e.g., the second network 199). According to various embodiments of the disclosure, the wireless communication module 192 may support a peak data rate for implementing eMBB (e.g., 20Gbps or more), loss coverage for implementing mMTC (e.g., 164dB or less), or U-plane latency for realizing URLLC (e.g., 0.5ms or less for each of downlink (DL) and uplink (UL) or 1ms or less for round trip).

The antenna module 197 may transmit or receive a signal or power to or from the outside (e.g., the external electronic device) of the electronic device 101. The antenna module 197 may include an antenna including a radiating element including a conductive material or a conductive pattern formed in or on a substrate (e.g., a printed circuit board (PCB)). The antenna module 197 may include a plurality of antennas (e.g., an antenna array). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments of the disclosure, the antenna module 197 may form a mmWave antenna module. According to various embodiments of the disclosure, the mmWave antenna module may include a PCB, an RFIC that is disposed on or adjacent to a first surface (e.g., the bottom surface) of the PCB and is capable of supporting a predetermined high-frequency band (e.g., a mmWave band), and a plurality of antennas (e.g., array antennas) that is disposed on or adjacent to a second surface (e.g., the top surface or the side surface) of the PCB and is capable of transmitting or receiving a signal of the predetermined high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the external electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide an ultra-low delay service using, for example, distributed computing or MEC. In another embodiment of the disclosure, the external electronic device 104 may include an internet of things (IoT) device. The server 108 may be an intelligent server using machine learning and/or neural networks. According to various embodiments of the disclosure, the external electronic device 104 or the server 108 may be included in the second network 199. The electronic device 101 may be applied to an intelligent service (e.g., smart home, smart city, smart car, or healthcare) based on 5G communication technology or IoT-related technology.

An electronic device according to various embodiments of the disclosure may be one of various types of electronic devices. The electronic devices may include a portable communication device (e.g., a smartphone), a computer device, a portable multimedia device, a portable medical device, a camera, a wearable device, or a home appliance. However, the electronic device is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). If an element (e.g., a first element) is referred to, with or without the term "operatively" or "communicatively," as "coupled with," "coupled to," "connected with," or "connected to" another element (e.g., a second element), the element may be coupled with the other element directly (e.g., wiredly), wirelessly, or via a third element.

The term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to various embodiments of the disclosure, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PLAYSTORE^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

Each component (e.g., a module or a program) of the above-described components may include a single entity or multiple entities. One or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. Operations performed by the module, the program, or another component may be carried out sequentially, in parallel, repeatedly, or heuristically, or one or more of the operations may be executed in a different order or omitted, or one or more other operations may be added.

In the present disclosure, when the term "substantially" is used to define a structural part (structure or structural element), an expression including the term "substantially" is understood or interpreted as a technical feature produced within a technical tolerance of a method used to manufacture the same.

In the present disclosure, "disposed on XX" may be understood as being disposed adjacent to XX, disposed to be substantially in contact with XX, or coupled to XX.

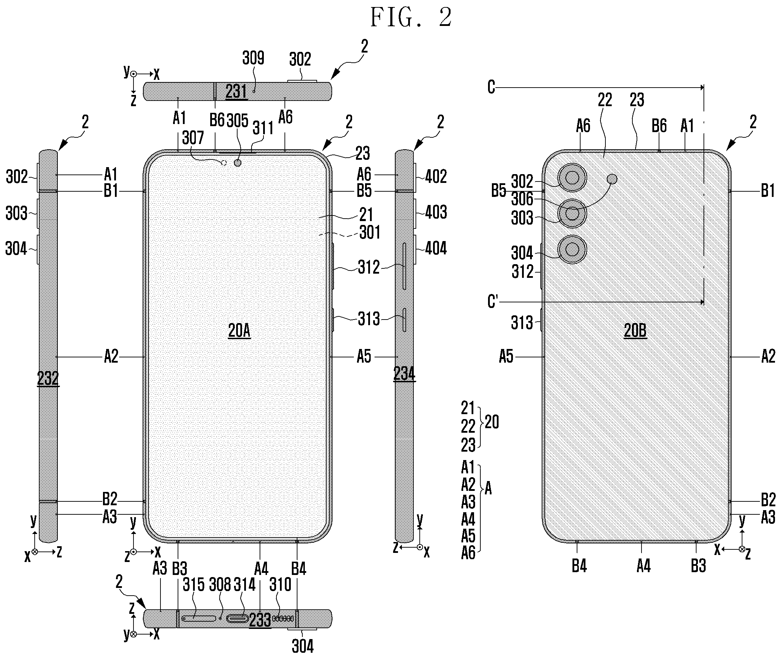

FIG. 2 is a view illustrating various aspects of an electronic device 2 according to various embodiments of the present disclosure.

In relation to FIG. 2, it may be understood in the present disclosure to contemplate and include all combinations of disclosed features and/or embodiments. All combinations of features described below with reference to FIG. 2 may be considered to be included in the present disclosure as specific examples.

In various embodiments of the present document, for convenience of description, a direction in which a display area included in the electronic device 2 is visually exposed (e.g., a +z-axis direction) is defined and used as a front surface 20A of the electronic device 2, and an opposite direction thereof (e.g., a -z-axis direction) is defined and used as a rear surface 20B of the electronic device 2.

With reference to FIG. 2, an electronic device 2 (e.g., the electronic device 101 of FIG. 1) may include a housing 20. The housing 20 may, for example, provide (or form) a front surface 20A of the electronic device 3, a rear surface 20B of the electronic device 2, and a side surface of the electronic device 2. In various embodiments, the housing 20 may refer to a structure (or structured body) providing at least a part of the front surface 20A, the rear surface 20B, and the side surface.

According to various embodiments, the housing 20 may include a front plate (or, a front cover, a first cover, or a first plate) 21, a rear plate (or, a rear cover, a second cover, or a second plate) 22, and/or a side (also referred to as a side surface portion, a lateral member, a side bezel, a side bezel structure, or a side wall portion) 23.

According to various embodiments, the front plate 21 may provide (or form) at least a portion of the front surface 20A of the electronic device 2. At least a portion of the front plate 21 may be substantially transparent. The front plate 21 may include, for example, a glass plate including various coating layers, or a polymer plate.

According to various embodiments, the rear plate 22 may provide (or form) at least a portion of the rear surface 20B of the electronic device 2. The rear plate 22 may be substantially opaque. The rear plate 22 may be formed by, for example, coated or colored glass, ceramic, polymer, metal (e.g., aluminum, stainless steel, or magnesium), or a combination of at least two of the above materials.

According to various embodiments, the side 23 may provide (or form) at least a portion of the side surface of the electronic device 2. The side 23 may include a metallic material and/or a non-metallic material (e.g., polymer).

According to various embodiments, the side 23 may include a first side (also referred to as a first side surface portion, a first side wall, or a first side wall portion) 231, a second side (also referred to as a second side surface portion, a second side wall, or a second side wall portion) 232, a third side (also referred to as a third side surface portion, a third side wall, or a third side wall portion) 233, and/or a fourth side (also referred to as a fourth side surface portion, a fourth side wall, or a fourth side wall portion) 234.

According to various embodiments, when viewed from above the front plate 21 (e.g., when viewed in the -z-axis direction), the first side 231 may be positioned to be spaced apart from the third side 233 in a +y-axis direction, and may be substantially parallel to the third side 233. The first side 231 may provide (or form) a first side surface corresponding to the +y-axis direction among side surfaces of the electronic device 2. The third side 233 may provide (or form) a third side surface corresponding to the -y-axis direction among the side surfaces of the electronic device 2.

According to various embodiments, the second side 232 may connect one end portion of the first side 231 and one end portion of the third side 233. The fourth side 234 may connect the other end portion of the first side 231 and the other end portion of the third side 233. When viewed from above the front plate 31, the second side 232 may be positioned to be spaced apart from the fourth side 234 in an -x-axis direction, and may be substantially parallel to the fourth side 234. The second side 232 may provide (or form) a second side surface corresponding to the -x-axis direction among the side surfaces of the electronic device 2. The fourth side 234 may provide (or form) a fourth side surface corresponding to the +x-axis direction among the side surfaces of the electronic device 2.

According to various embodiments, a first corner where the first side 231 and the second side 232 are connected, a second corner where the second side 232 and the third side 233 are connected, a third corner where the third side 233 and the fourth side 234 are connected, and/or a fourth corner where the first side 231 and the fourth side 234 are connected may be provided (or formed) in a smoothly curved shape.

According to various embodiments, the side 23 may include a plurality of metals (also referred to as a plurality of side metals, a plurality of conductive portions, or a plurality of side conductive portions) A1, A2, A3, A4, A5, and A6 and a plurality of insulating portions (also referred to as a plurality of non-metals, a plurality of non-conductive portions, or a plurality of side non-conductive portions) B1, B2, B3, B4, B5, and B6. The plurality of metals A1, A2, A3, A4, A5, and A6 include a first metal A1, a second metal A2, a third metal A3, a fourth metal A4, a fifth metal A5, and a sixth metal A6. The plurality of insulating portions B1, B2, B3, B4, B5, and B6 include a first insulating portion B1, a second insulating portion B2, a third insulating portion B3, a fourth insulating portion B4, a fifth insulating portion B5, and a sixth insulating portion B6. The first insulating portion B1 may be disposed at a first segment portion between the first metal A1 and the second metal A2. The first metal A1 and the second metal A2 may be physically separated from each other with the first insulating portion B1 interposed therebetween. The second insulating portion B2 may be disposed at a second segment portion between the second metal A2 and the third metal A3. The second metal A2 and the third metal A3 may be physically separated from each other with the second insulating portion B2 interposed therebetween. The third insulating portion B3 may be disposed at a third segment portion between the third metal A3 and the fourth metal A4. The third metal A3 and the fourth metal A4 may be physically separated from each other with the third insulating portion B3 interposed therebetween. The fourth insulating portion B4 may be disposed at a fourth segment portion between the fourth metal A4 and the fifth metal A5. The fourth metal A4 and the fifth metal A5 may be physically separated from each other with the fourth insulating portion B4 interposed therebetween. The fifth insulating portion B5 may be disposed at a fifth segment portion between the fifth metal A5 and the sixth metal A6. The fifth metal A5 and the sixth metal A6 may be physically separated from each other with the fifth insulating portion B5 interposed therebetween. The sixth insulating portion B6 may be disposed at a sixth segment portion between the first metal A1 and the sixth metal A6. The first metal A1 and the sixth metal A6 may be physically separated from each other with the sixth insulating portion B6 interposed therebetween.

According to various embodiments, the side surface of the electronic device 2 may include surface areas provided by the plurality of metals A1, A2, A3, A4, A5, and A6 and surface areas provided by the plurality of insulating portions B1, B2, B3, B4, B5, and B6. The surface areas provided by the plurality of metals A1, A2, A3, A4, A5, and A6 and the surface areas provided by the plurality of insulating portions B1, B2, B3, B4, B5, and B6 may be smoothly connected without a substantial height difference.

According to various embodiments, a combination of the plurality of metals A1, A2, A3, A4, A5, and A6 may be defined or interpreted as a side metal structure A (also referred to as an outer metal structure, a side conductive structure, or an outer conductive structure).

According to various embodiments, positions, shapes, or the number of the plurality of metals included in the side 23, and positions or the number of the plurality of insulating portions provided corresponding to the plurality of metals are not limited to the illustrated example and may be various.

According to various embodiments, an integrated or single structure or member (e.g., a single continuous structure or member, or a complete structure or member) including the rear plate 22 and the side 23 may be provided (or formed).

According to various embodiments, the electronic device 2 may include a display module 301, a first camera module 302, a second camera module 303, a third camera module 304, a fourth camera module 305, a first light emitting module 306, a second light emitting module (not separately illustrated), a first sensor module 307, a second sensor module (not separately illustrated), a first sound input module (not separately illustrated), a second sound input module (not separately illustrated), a first sound output module (not separately illustrated), a second sound output module (not separately illustrated), a key input module, a first connection terminal 314, and/or a second connection terminal (not separately illustrated). The electronic device 2 may omit at least one of the above components (or constituent elements) or may additionally include other components.

According to various embodiments, a display area (also referred to as an active area or a screen area) of the display module (also referred to as a display) 301 may be visually seen through the front plate 21.

According to various embodiments, the first camera module (also referred to as a first camera) 302, the second camera module (also referred to as a second camera) 303, the third camera module (also referred to as a third camera) 304, or the fourth camera module (also referred to as a fourth camera) 305 may include one or more lenses, image sensor(s), and/or an image signal processor (ISP).

According to various embodiments, the first camera module 302, the second camera module 303, and the third camera module 304 may be provided corresponding to the rear surface 20B of the electronic device 2.

According to various embodiments, the first camera module (also referred to as a first rear camera module or a first rear camera) 302 is positioned corresponding to a first camera hole of the rear plate 22, and may be seen from the outside of the electronic device 2 through the first camera hole. The second camera module (also referred to as a second rear camera module or a second rear camera) 303 is positioned corresponding to a second camera hole of the rear plate 22, and may be seen from the outside of the electronic device 2 through the second camera hole. The third camera module (also referred to as a third rear camera module or a third rear camera) 303 is positioned corresponding to a third camera hole provided in the rear plate 22, and may be seen from the outside of the electronic device 2 through the third camera hole. In various embodiments, a rear plate 22 may include a first light-transmitting area replacing a first camera hole, a second light-transmitting area replacing a second camera hole, and/or a third light-transmitting area replacing a third camera hole.

According to various embodiments, when viewed from above a rear surface 20B of an electronic device 2 (e.g., when viewed in a +z-axis direction), a first camera module 302, a second camera module 303, and a third camera module 304 may be disposed in a direction from a first side 231 toward a third side 233 (e.g., a -y-axis direction). When viewed from above the rear surface 20B of the electronic device 2, the first camera module 302 is positioned corresponding to a fourth corner where the first side 231 and a fourth side 234 are connected, and the second camera module 303 may be positioned between the first camera module 302 and the third camera module 304.

According to various embodiments, relative positions among the first camera module 302, the second camera module 303, and the third camera module 304, and a shape of the rear plate 22 corresponding to the relative positions are not limited to the illustrated example and may be various. The number of camera modules corresponding to the second rear plate 22 is not limited to the illustrated example and may be various.

According to various embodiments, the first camera module 302, the second camera module 303, or the third camera module 304 may include a wide-angle camera module, a telephoto camera module, a color camera module, a monochrome camera module, or an IR camera (e.g., a time of flight (TOF) camera or a structured light camera) module.

According to various embodiments, the first camera module 302, the second camera module 303, and the third camera module 304 may have different attributes (e.g., angle of view) or functions.

According to various embodiments, a fourth camera module 405 may be positioned inside the electronic device 2 corresponding to a front surface 20A of the electronic device 2. External light may pass through a front plate 21 and reach the fourth camera module 305.

According to various embodiments, the fourth camera module (also referred to as a front camera module or a front camera) 305 may be positioned closer to the first side 231 than the third side 233 when viewed from above the front surface 20A of the electronic device 2. When viewed from above the front surface 20A of the electronic device 2, a distance at which the fourth camera module 305 is spaced apart from a second side 232 and a distance at which the fourth camera module 305 is spaced apart from the fourth side 234 may be substantially identical.

According to various embodiments, the fourth camera module 305 may be positioned in alignment with an opening provided in a display area of a display module 301 or may be at least partially inserted into the opening. External light may pass through the front plate 21 and the opening of the display area and reach the fourth camera module 305. The opening of the display area aligned or overlapped with the fourth camera module 305 may be provided in a hole shape. In various embodiments, when viewed from above the front surface 20A of the electronic device 2, the opening of the display area aligned or overlapped with the fourth camera module 305 may be provided as a notch (not separately illustrated).

According to various embodiments, the fourth camera module 305 may overlap the display area of the display module 301 when viewed from above the front surface 20A of the electronic device 2. The fourth camera module 305 may be positioned on a back surface of the display area or below or beneath the display area. When viewed from the outside of the electronic device 2, the fourth camera module 305, or a position of the fourth camera module 305, may not be substantially visually distinguished (or exposed). The fourth camera module 305 may include, for example, a hidden display back surface camera (e.g., an under display camera (UDC)). External light may pass through the front plate 21 and the display area and reach the fourth camera module 305.

According to various embodiments, the fourth camera module 305 may be positioned in alignment with a recess (not separately illustrated) provided on the back surface of the display area or may be at least partially inserted into the recess. When viewed from the outside of the electronic device 2, the fourth camera module 305, or a position of the fourth camera module 305, may not be substantially visually distinguished (or exposed).

According to various embodiments, although not separately illustrated, a partial area of the display area at least partially overlapped with the fourth camera module 305 may include a different pixel structure and/or wiring structure compared to other areas. The pixel structure and/or wiring structure provided in the partial area of the display area at least partially overlapped with the fourth camera module 305 may be implemented to reduce loss of light between the outside of the electronic device 2 and the fourth camera module 305. The partial area of the display area at least partially overlapped with the fourth camera module 305 may, for example, have a different pixel density (e.g., the number of pixels per unit area) compared to the other areas. For example, the partial area of the display area at least partially overlapped with the fourth camera module 305 may not substantially include a plurality of pixels.

According to various embodiments, a first light emitting module 306 may be provided corresponding to the rear surface 20B of the electronic device 2. The first light emitting module 306 may include a light source for the first camera module 302, the second camera module 303, and/or the third camera module 304. The first light emitting module 306 may include, for example, an LED, an IR LED, or a xenon lamp, but is not limited thereto.

According to various embodiments, a second light emitting module (e.g., an LED, an IR LED, or a xenon lamp) (not separately illustrated) may be provided corresponding to the front surface 20A of the electronic device 2. The second light emitting module may provide state information of the electronic device 2 in a light form. In various embodiments, the second light emitting module may provide a light source interlocked with an operation of the fourth camera module 305.

According to various embodiments, a first sensor module 307 may be positioned inside the electronic device 2 corresponding to the front surface 20A of the electronic device 2. The first sensor module 307 may include, for example, an optical sensor (e.g., a proximity sensor or an illuminance sensor). A position of the first sensor module 307 is not limited to the illustrated example and may be various.

According to various embodiments, the first sensor module 307 may overlap the display area of the display module 301 when viewed from above the front surface 20A of the electronic device 2. The first sensor module 307 may be positioned on the back surface of the display area or below or beneath the display area. When viewed from the outside of the electronic device 2, the first sensor module 307, or a position of the first sensor module 307, may not be substantially visually distinguished (or exposed). External light may pass through the front plate 21 and the display area and reach the first sensor module 307.

According to various embodiments, the first sensor module 307 may be positioned in alignment with a recess (not separately illustrated) provided on the back surface of the display area or may be at least partially inserted into the recess. When viewed from the outside of the electronic device 2, the first sensor module 307, or a position of the first sensor module 307, may not be substantially visually distinguished (or exposed).

According to various embodiments, although not separately illustrated, a partial area of the display area of the display module 301 at least partially overlapped with the first sensor module 307 may include a different pixel structure and/or wiring structure compared to the other areas. The pixel structure and/or wiring structure provided in the partial area of the display area at least partially overlapped with the first sensor module 307 may be implemented to reduce loss of light between the outside of the electronic device 2 and the first sensor module 307. For example, the partial area of the display area at least partially overlapped with the first sensor module 307 may have a different pixel density (e.g., the number of pixels per unit area) compared to the other areas. For example, the partial area of the display area at least partially overlapped with the first sensor module 307 may not substantially include a plurality of pixels.

According to various embodiments, the first sensor module 307 may be positioned in alignment with an opening provided in the display area of the display module 301 or may be at least partially inserted into the opening. External light may pass through the front plate 21 and the opening of the display area and reach the first sensor module 307. The opening of the display area aligned or overlapped with the first sensor module 307 may be provided in a hole shape. In various embodiments, when viewed from above the front surface 20A of the electronic device 2, the opening of the display area aligned or overlapped with the first sensor module 307 may be provided as a notch (not separately illustrated).

According to various embodiments, a second sensor module (not separately illustrated) may include an optical, capacitive, or ultrasonic biometric sensor (e.g., a fingerprint sensor). The second sensor module may be disposed in the electronic device 2 in at least partially the same or similar manner as the first sensor module 307. The electronic device 2 may further include at least one third sensor module (not separately illustrated) provided at various other positions.

According to various embodiments, a first sound input module (not separately illustrated) may include a first microphone (or a first mic). A second sound input module (not separately illustrated) may include a second microphone (or a second mic). The first microphone may, for example, be positioned inside the electronic device 2 corresponding to a first microphone hole 308 provided in the third side 233. The second microphone may, for example, be positioned inside the electronic device 2 corresponding to a second microphone hole 309 provided in the first side 231. A position or the number of the microphone and the microphone hole 308 or 309 corresponding to the microphone are not limited to the illustrated example and may be various.

According to various embodiments, a first sound output module (not separately illustrated) may include a first speaker used to play data regarding multimedia or recording. The first speaker may, for example, be positioned inside the electronic device 2 corresponding to a first speaker hole 310 provided in the third side 233. A position or the number of the first sound output module including the first speaker may be various.

According to various embodiments, a second sound output module (not separately illustrated) may include a second speaker (e.g., a receiver for calls) used for calls. The second speaker may, for example, be positioned inside the electronic device 2 corresponding to a second speaker hole 311 (e.g., an opening in the form of a through-hole or a notch) provided in a front plate 21 or a first side 231 between the front plate 21 and the first side 231. A position or the number of the second sound output module including the second speaker may be various.

According to various embodiments, the first speaker may include a piezoelectric speaker, and in this case, a first speaker hole 310 may be omitted.

According to various embodiments, the second speaker may include a piezoelectric speaker, and in this case, the second speaker hole 311 may be omitted.

According to various embodiments, a first single hole (not separately illustrated) replacing a first microphone hole 308 and the first speaker hole 310 may be provided.

According to various embodiments, a second single hole (not separately illustrated) replacing a second microphone hole 309 and the second speaker hole 311 may be provided.

According to various embodiments, a key input module may include at least one key (also referred to as a side key) 312 and 313 positioned in an opening of the first side 331, and a key signal generating portion (not separately illustrated) generating a key signal in response to a press or a touch on the at least one key 312 and 313. A position or the number of the key input module is not limited to the illustrated example and may be various.

According to various embodiments, a first connection terminal (e.g., a first connector) 314 is positioned inside the electronic device 2 corresponding to a first connection terminal hole (e.g., a first connector hole) provided in a third side 233. An external electronic device may be electrically connected to the electronic device 2 through the first connection terminal 314. The electronic device 2 may receive power and/or data from the external electronic device or transmit them to the external electronic device through the first connection terminal 314. The first connection terminal 314 may include, for example, a USB connector or an HDMI connector. A position or the number of the first connection terminal 314 is not limited to the illustrated example and may be various.

According to various embodiments, a second connection terminal (e.g., a second connector) (not separately illustrated) is positioned inside the electronic device 2 corresponding to a second connection terminal hole (e.g., a second connector hole) provided in the third side 233. A cover member 315 is positioned in the second connection terminal hole and may have a second connection terminal. An external storage medium such as a SIM card (or a universal SIM (USIM) card) or a memory card (e.g., a secure digital memory (SD) card) may be connected to the second connection terminal. A position or the number of the second connection terminal is not limited to the illustrated example and may be various.

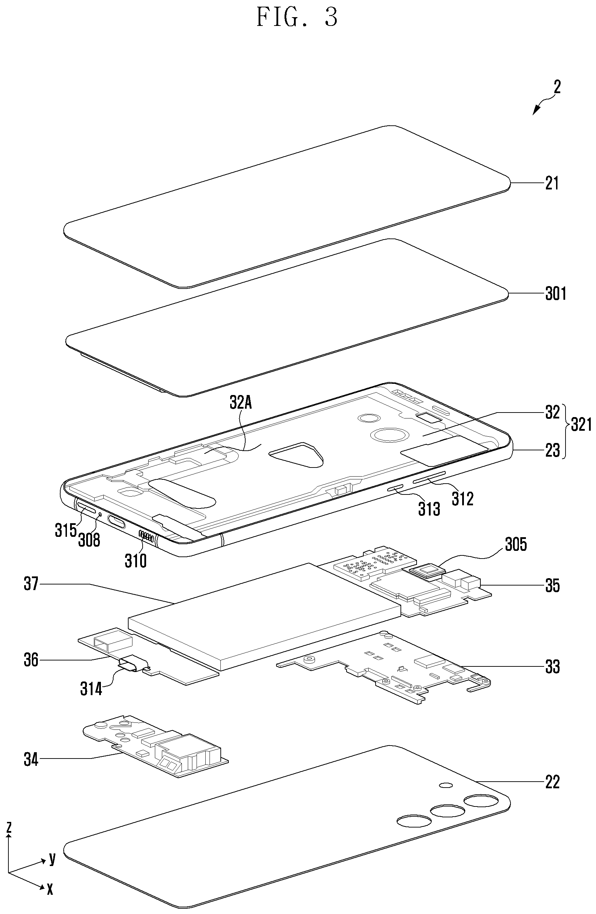

FIG. 3 is an exploded perspective view of the electronic device 2 according to various embodiments of the present disclosure.

In relation to FIG. 3, it may be understood in the present disclosure to contemplate and include all combinations of disclosed features and/or embodiments. All combinations of features described below with reference to FIG. 3 may be considered to be included in the present disclosure as specific examples.

With reference to FIG. 3, the electronic device 2 may include the front plate 21, a rear plate 22, a side 23, a first supporting portion (also referred to as a first support, a first supporting member, a first supporting structure, a bracket, or a supporting plate) 32, a second supporting portion (also referred to as a second support, a second supporting member, or a second supporting structure) 33, a third supporting portion (also referred to as a third support, a third supporting member, or a third supporting structure) 34, a display module 301, a first printed circuit board 35, a second printed circuit board 36, and/or a battery 37. Descriptions for some components identical to reference numerals illustrated in FIG. 2 are omitted.

According to various embodiments, the first supporting portion 32 may be at least partially positioned between the front plate 21 and the rear plate 22. The first supporting portion 32 may be connected to the side 23. The first supporting portion 32 may include a metallic material and/or a non-metallic material (e.g., polymer).

According to various embodiments, the first supporting portion 32 may include a first supporting surface 32A facing the front plate 21, and a second supporting surface (not separately illustrated) provided on an opposite side to the first supporting surface 32A and facing the rear plate 42. The first supporting surface 32A may provide a front seating portion for stably disposing or supporting one or more components. The front seating portion may be provided as a combination of surface areas of different heights. The second supporting surface may provide a rear seating portion for stably disposing or supporting one or more components. The rear seating portion may be provided as a combination of surface areas of different heights.

According to various embodiments, the electronic device 2 may include a first space (not separately illustrated) between the first supporting surface 32A and the front plate 21, and a second space (not separately illustrated) between the second supporting surface and the rear plate 22. A component such as the display module 301 may be disposed on the first supporting surface 32A in the first space. Components such as a first camera module 302 (see FIG. 2), a second camera module 303 (see FIG. 2), a third camera module 304 (see FIG. 2), the second supporting portion 33, the third supporting portion 34, the first printed circuit board 35, the second printed circuit board 36, and the battery 37 may be disposed on the second supporting surface in the second space.

According to various embodiments, a combination of the first supporting portion 32 and the side 23 may provide (or form) a frame (or, a frame structure or a framework) 321 of the electronic device 2.

According to various embodiments, the first supporting portion 32 may include a conductor (also referred to as a conductive structure) including one or more conductive portions, and a non-conductor (also referred to as a non-conductive structure) connected to the conductor and including one or more non-conductive portions.

According to various embodiments, the conductor of the first supporting portion 32 may be connected to a side metal structure A (see FIG. 2) of the side 23. The conductor of the first supporting portion 32 and the side metal structure A of the side 23 may include the same metallic material or different metallic materials from each other.

According to various embodiments, an integrated or single metal structure or member (e.g., a single continuous metal structure or metal member, or a complete metal structure or metal member) including the conductor of the first supporting portion 32 and the side metal structure A (see FIG. 2) of the side 23 may be provided (or formed). The conductor of the first supporting portion 32 and the side metal structure A of the side 23 may include the same metal material.

According to various embodiments, the non-conductor of the first supporting portion 32 may be connected to a plurality of insulating portions B1, B2, B3, B4, B5, and B6 (see FIG. 2) of the side 23.

According to various embodiments, an integrated or single non-metallic structure or member (e.g., a single continuous non-metallic structure or non-metallic member, or a complete non-metallic structure or non-metallic structure) including the non-conductor of the first supporting portion 32 and the plurality of insulating portions B1, B2, B3, B4, B5, and B6 (see FIG. 2) of the side 23 may be provided (or formed). The non-conductor of the first supporting portion 32 and the plurality of insulating portions B1, B2, B3, B4, B5, and B6 of the side 23 may include the same non-metallic material.

According to various embodiments, electronic components such as the display 301, the first printed circuit board 35, the second printed circuit board 36, or the battery 37, or various members related to the electronic components, may be disposed on the frame 321 or the first supporting portion 32, or may be supported by the frame 321 or the first supporting portion 32.

According to various embodiments, the first supporting portion 32 may be interpreted as a portion of the housing 20 (see FIG. 2).

According to various embodiments, the display module 301 may be positioned between the first supporting portion 32 and the front plate 21. The display module 301 may be disposed on (or coupled to) the front plate 21 and/or the first supporting portion 32. In various embodiments, the display module 301 may be coupled to the front plate 21 through an optical clear adhesive member (or an optical clear adhesive material) such as optical clear adhesive (OCA), optical clear resin (OCR), or super view resin (SVR).

According to various embodiments, the first printed circuit board 35 and the second printed circuit board 36 may be disposed on or coupled to the first supporting portion 32 between the first supporting portion 32 and the rear plate 22. In various embodiments, the first printed circuit board 35 and the second printed circuit board 36 may be coupled to the first supporting portion 32 through screw fastening.

According to various embodiments, the battery 37 may be disposed on or coupled to the first supporting portion 32 between the first supporting portion 32 and the rear plate 22. In various embodiments, the battery 37 may be coupled to the first supporting portion 32 through mechanical fastening such as screw fastening, or bonding.

According to various embodiments, a plurality of electronic components may be electrically connected to a first printed circuit board 35. A portion of the plurality of electronic components may be disposed on the first printed circuit board 35. Another portion of the plurality of electronic components may be electrically connected to the first printed circuit board 35 through an electrical path such as a flexible printed circuit board or a cable. The plurality of electronic components may include, for example, a display module 301, a second microphone corresponding to a second microphone hole 309 (see FIG. 2), a first camera module 302, a second camera module 303, a third camera module 304, a fourth camera module 305, a first light emitting module 306 (see FIG. 2), a first sensor module 307 (see FIG. 2), and/or a key input module including at least one key 312 and 313.

According to various embodiments, the plurality of electronic components may be electrically connected to a second printed circuit board 36. A portion of the plurality of electronic components may be disposed on the second printed circuit board 36. Another portion of the plurality of electronic components may be electrically connected to the second printed circuit board 36 through an electrical path such as a flexible printed circuit board or a cable. The plurality of electronic components may include, for example, a first microphone corresponding to a first microphone hole 308, a first speaker corresponding to a first speaker hole 310, a first connection terminal 314, or a second connection terminal corresponding to a cover member 315.

According to various embodiments, the first printed circuit board 35 and the second printed circuit board 36 may be electrically connected through an electrical path such as a flexible printed circuit board.

According to various embodiments, the first printed circuit board 35 and the second printed circuit board 36 may be positioned to be spaced apart from each other with the battery 37 interposed therebetween when viewed from above the rear plate 22.

According to various embodiments, when viewed from above the rear plate 22, the first printed circuit board 35 may be at least partially positioned between a first side 231 (see FIG. 2) and the battery 37. When viewed from above the rear plate 22, the second printed circuit board 36 may be at least partially positioned between a third side 233 (see FIG. 2) and the battery 37.

According to various embodiments, when viewed from above the rear plate 22, the first printed circuit board 35 may further include a protruding portion (not separately illustrated) extending between a second side 232 (see FIG. 2) and the battery 37, or between a fourth side 234 (see FIG. 2) and the battery 37. The protruding portion may be electrically connected to the second printed circuit board 36 through an electrical path such as a flexible printed circuit board.

According to various embodiments, an integrated or single printed circuit board (not separately illustrated) replacing the first printed circuit board 35 and the second printed circuit board 36 may be provided (or formed). The integrated or single printed circuit board may include, for example, a first board portion positioned between the first side 231 (see FIG. 2) and the battery 37, a second board portion positioned between the third side 233 (see FIG. 2) and the battery 37, and a third board portion connecting the first board portion and the second board portion, when viewed from above the rear plate 22. The third board portion may be positioned between the second side 232 (see FIG. 2) and the battery 37, or between the fourth side 234 (see FIG. 2) and the battery 37, when viewed from above the rear plate 22. The third portion may be implemented substantially rigidly or flexibly.

According to various embodiments, although not separately illustrated, the first printed circuit board 35 or the second printed circuit board 36 may include a primary PCB (or, a main PCB), a secondary PCB (or a sub PCB), and/or an interposer substrate. When viewed from above the rear plate 22, the primary PCB and the secondary PCB may overlap. The interposer substrate may be disposed between the primary PCB and the secondary PCB, and may electrically connect the primary PCB and the secondary PCB.

According to various embodiments, the battery 37 is an apparatus for supplying power to at least one component of the electronic device 2, and may include, for example, a non-rechargeable primary battery, or a rechargeable secondary battery, or a fuel cell.

According to various embodiments, a conductor (not separately illustrated) included in the first supporting portion 32 may be electrically connected to a first ground area (not separately illustrated) included in the first printed circuit board 35. The conductor of the first supporting portion 32 may be electrically connected to the first ground area of the first printed circuit board 35 through, for example, a conductive adhesive material or a flexible conductor (or, a flexible conductive portion or a flexible conductive member) disposed between the conductor of the first supporting portion 32 and the first printed circuit board 35. The flexible conductive member may include, for example, a conductive clip (e.g., a conductive structure including an elastic structure), a pogo-pin, a spring, conductive poron, conductive rubber, conductive tape, or a conductive connector.

According to various embodiments, the conductor included in the first supporting portion 32 may be electrically connected to a second ground area (not separately illustrated) included in the second printed circuit board 36. The conductor of the first supporting portion 32 may be electrically connected to the second ground area of the second printed circuit board 36 through, for example, a conductive adhesive material or a flexible conductor (or, a flexible conductive portion or a flexible conductive member) disposed between the conductor of the first supporting portion 32 and the second printed circuit board 36.

According to various embodiments, the first ground area of the first printed circuit board 35 and the second ground area of the second printed circuit board 36 may be electrically connected through an electrical connection member (e.g., a flexible printed circuit board) (not separately illustrated) that electrically connects the first printed circuit board 35 and the second printed circuit board 36.

According to various embodiments, a portion of a side metal structure A (see FIG. 2) of the side 23 may be electrically connected to the first ground area of the first printed circuit board 35. The portion of the side metal structure A may be electrically connected to the first ground area included in the first printed circuit board 35 through, for example, a conductive adhesive material or a flexible conductor (or, a flexible conductive portion or a flexible conductive member) disposed between the side metal structure A and the first printed circuit board 35.

According to various embodiments, a portion of the side metal structure A (see FIG. 2) of the side 23 may be electrically connected to the second ground area of the second printed circuit board 36. The portion of the side metal structure A may be electrically connected to the second ground area included in the second printed circuit board 36 through, for example, a conductive adhesive material or a flexible conductor (or, a flexible conductive portion or a flexible conductive member) disposed between the side metal structure A and the second printed circuit board 36.

According to various embodiments, at least one conductive layer (e.g., a metallic sheet for electromagnetic shielding such as a copper sheet) included in the display module 301 may be electrically connected to the conductor of the first supporting portion 32 through a conductive material (e.g., a conductive adhesive material) or a flexible conductor disposed between the display module 301 and the conductor of the first supporting portion 32.

According to various embodiments, a combination of the conductor included in the first supporting portion 32, the side metal structure A (see FIG. 2) of the side 23, the first ground area of the first printed circuit board 35, the second ground area of the second printed circuit board 36, and the at least one conductive layer in the display module 301 may be defined or interpreted as a ground structure (also referred to as a ground) of the electronic device 2. The ground structure of the electronic device 2 may further include various other conductors or metallic bodies (not separately illustrated) electrically connected to the conductor included in the first supporting portion 32, the side metal structure A of the side 23, the first ground area of the first printed circuit board 35, the second ground area of the second printed circuit board 36, or the at least one conductive layer of the display module 301.

According to various embodiments, the ground structure of the electronic device 2 may reduce or prevent electromagnetic interference (EMI) with respect to electrical elements included in the electronic device 2. The ground structure of the electronic device 2 may, for example, reduce or prevent an electromagnetic influence of noise from the outside of the electronic device 2 on the electrical elements included in the electronic device 2. The ground structure of the electronic device 2 may, for example, reduce or prevent electromagnetic interference between the electrical elements included in the electronic device 2.

According to various embodiments, the electronic device 2 may include a first conductive area (not separately illustrated) and a second conductive area (not separately illustrated). The first conductive area and the second conductive area may be electrically connected, or electrically and physically connected. According to various embodiments of the present disclosure, when the first conductive area is configured to substantially radiate electromagnetic waves, the first conductive area among the combination of the first conductive area and the second conductive area is defined or interpreted as an antenna radiator, and the second conductive area among the combination of the first conductive area and the second conductive area may operate as the ground structure of the electronic device 2 distinguished from the antenna radiator. According to various embodiments of the present disclosure, when the first conductive area is configured to substantially radiate electromagnetic waves, the combination of the first conductive area and the second conductive area may operate as the ground structure of the electronic device 2, and the first conductive area may be defined or interpreted as an antenna radiator implemented through a portion of the ground structure of the electronic device 2. According to various embodiments of the present disclosure, when the first conductive area is configured to substantially radiate electromagnetic waves, the second conductive area may operate as an antenna ground exerting an electromagnetic influence on the first conductive area (e.g., the antenna radiator). The antenna ground may contribute to securing antenna radiation performance (or, radio wave transmission and reception performance or communication performance) and/or securing coverage with respect to the antenna radiator. The antenna ground may reduce electromagnetic interference (EMI) or signal loss with respect to the antenna radiator.

According to various embodiments, a portion of the ground structure of the electronic device 2 may be configured as an antenna radiator. A portion of the ground structure of the electronic device 2 may be electrically connected to a wireless communication circuit disposed on the first printed circuit board 35 or the second printed circuit board 36. A portion of the ground structure of the electronic device 2 may operate as an antenna radiator (or, a radiator, a radiating portion, or a resonator) by receiving (or feeding) an electromagnetic signal (or, a radio signal, an RF signal, or a radiation current) from the wireless communication circuit. In various embodiments, the wireless communication circuit may be described as the wireless communication module 192 of FIG. 1. In various embodiments, the wireless communication circuit may include a wireless communication processor (CP).

According to various embodiments, the second supporting portion 33 may be positioned between the first supporting portion 32 and the rear plate 22. At least a portion of the first printed circuit board 35 may be positioned between the first supporting portion 32 and the second supporting portion 33, and the second supporting portion 33 may protect the first printed circuit board 35. The second supporting portion 33 may be coupled to the first supporting portion 32 and/or the first printed circuit board 35 through screw fastening or various other methods.

According to various embodiments, a third supporting portion 34 may be positioned between the first supporting portion 32 and the rear plate 22. At least a portion of the second printed circuit board 36 may be positioned between the first supporting portion 32 and the third supporting portion 34, and the third supporting portion 34 may protect the second printed circuit board 36. The third supporting portion 34 may be coupled to the first supporting portion 32 and/or the second printed circuit board 36 through screw fastening or various other methods.

According to various embodiments, the second supporting portion 33 and the third supporting portion 34 may be spaced apart from each other with a battery 37 interposed therebetween when viewed from above the rear plate 22.

According to various embodiments, a frame 321 may be defined or interpreted as a 'front case' of the electronic device 2, and the second supporting portion 33 and/or the third supporting portion 34 may be defined or interpreted as a 'rear case' of the electronic device 2.

According to various embodiments, the second supporting portion 33 and/or the third supporting portion 34 may be interpreted as a portion of a housing 20 (see FIG. 2).

According to various embodiments, an integrated or single member (not separately illustrated) replacing the second supporting portion 33 and the third supporting portion 34 may be provided.

According to various embodiments, the second supporting portion 33 or the third supporting portion 34 may include a metallic material and/or a non-metallic material (e.g., polymer).

According to various embodiments, at least a portion of a plurality of metals A1, A2, A3, A4, A5, and A6 (see FIG. 2) included in a side 23 may be configured to operate as an antenna radiator. At least a portion of the plurality of metals A1, A2, A3, A4, A5, and A6 of the side 23 may, for example, be electrically connected to a wireless communication circuit (e.g., the wireless communication module 192 of FIG. 1) disposed on the first printed circuit board 35 or the second printed circuit board 36.

According to various embodiments, the second supporting portion 33 or the third supporting portion 34 may include a non-conductor (not separately illustrated) of a non-metallic material, and at least one conductive pattern (not separately illustrated) disposed on the non-conductor. The at least one conductive pattern may, for example, be disposed on the non-conductor through laser direct structuring (LDS). LDS may be a method of drawing a pattern on a non-conductor using a laser and forming a conductive pattern by plating a conductive material such as copper or nickel thereon. The at least one conductive pattern included in the second supporting portion 33 or the third supporting portion 34 may be configured to operate as an antenna radiator. The at least one conductive pattern included in the second supporting portion 33 or the third supporting portion 34 may, for example, be electrically connected to a wireless communication circuit (e.g., the wireless communication module 192 of FIG. 1) disposed on the first printed circuit board 35 or the second printed circuit board 36.

According to various embodiments, the wireless communication circuit (e.g., the wireless communication module 192 of FIG. 1) may process a transmission signal or a reception signal in at least one selected or designated frequency band through at least one antenna radiator (e.g., at least one metal included in the side 23, or at least one conductive pattern included in the second supporting portion 33 or the third supporting portion 34). The selected or designated frequency band may include, for example, at least one of a low band (LB) (about 600 MHz to about 1 GHz), a middle band (MB) (about 1 GHz to about 2.3 GHz), a high band (HB) (about 2.3 GHz to about 2.7 GHz), or an ultra-high band (UHB) (about 2.7 GHz to about 6 GHz). The designated frequency band may include various other frequency bands.

The electronic device 2 may further include various components according to a form in which it is provided. Such components vary in modification according to a convergence trend of various electronic devices 2 and thus cannot all be listed, but components of a level equivalent to the above-mentioned components may be additionally further included in the various electronic devices 2. In various embodiments, specific components may be excluded from the above-mentioned components or replaced with other components according to the form in which it is provided.

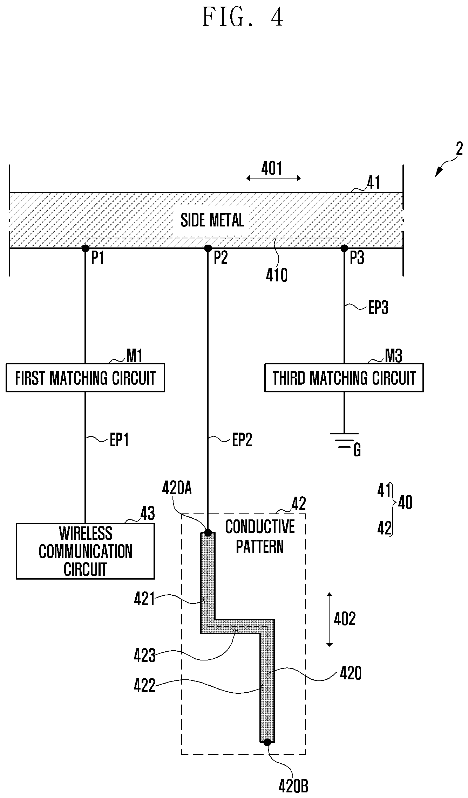

FIG. 4 is a block diagram regarding a portion of the electronic device 2 according to various embodiments of the present disclosure.

In relation to FIG. 4, it may be understood in the present disclosure to contemplate and include all combinations of disclosed features and/or embodiments. All combinations of features described below with reference to FIG. 4 may be considered to be included in the present disclosure as specific examples.

With reference to FIG. 4, the electronic device 2 may include a side metal 41, a conductive pattern 42, a wireless communication circuit 43, and an antenna ground G.

According to various embodiments, the side metal 41 may be included in a side metal structure A of FIG. 2 of the electronic device 2. The side metal 41 may include, for example, a first metal A1, a second metal A2, a third metal A3, a fourth metal A4, a fifth metal A5, or a sixth metal A6.

According to various embodiments, the conductive pattern 42 may be at least partially positioned inside the electronic device 2.

According to various embodiments, the conductive pattern 42 may be disposed on or included in the second supporting portion 33 of FIG. 3 or the third supporting portion 34 of FIG. 3. The second supporting portion 33 or the third supporting portion 34 may include a non-conductor of a non-metallic material and the conductive pattern 42 disposed on the non-conductor. In various embodiments, the conductive pattern 42 may be disposed on the non-conductor of the second supporting portion 33 or the third supporting portion 34 through LDS.

According to various embodiments, the conductive pattern 42 may be disposed on the first printed circuit board 35 of FIG. 3 or the second printed circuit board 36 of FIG. 3. The conductive pattern 42 may include, for example, a microstrip disposed on the first printed circuit board 35 or the second printed circuit board 36.

According to various embodiments, the conductive pattern 42 may be disposed on the second rear plate 22. The conductive pattern 42 may, for example, be positioned between the first supporting portion 32 and the rear plate 22 of FIG. 3, and may be disposed on the rear plate 22.

According to various embodiments, the conductive pattern 42 may be positioned between the second supporting portion 33 of FIG. 3 and the rear plate 22. The conductive pattern 42 may be positioned between the third supporting portion 34 of FIG. 3 and the rear plate 22.

A position of the conductive pattern 42 in the electronic device 2 may be otherwise various.

According to various embodiments, the side metal 41 and the conductive pattern 42 may be electrically connected.

According to various embodiments, the side metal 41 and the conductive pattern 42 may be electrically connected through a second electrical path EP2. The second electrical path EP2 may include one or more conductive members, one or more conductive structures, or one or more conductive paths between the side metal 41 and the conductive pattern 42, or a combination thereof.

According to various embodiments, the second electrical path EP2 may be electrically connected to a second point P2 on the side metal 41.

According to various embodiments, the side metal 41 and the conductive pattern 42 may be connected through a conductive adhesive material. The second electrical path EP2 may include the conductive adhesive material between the side metal 41 and the conductive pattern 42.

According to various embodiments, the side metal 41 and the conductive pattern 42 may be connected through screw fastening. The side metal 41 and the conductive pattern 42 may be electrically connected through physical contact between the side metal 41 and the conductive pattern 42, and a screw. The second electrical path EP2 may include the screw.

According to various embodiments, the side metal 41 and the conductive pattern 42 may be electrically connected through physical contact between the side metal 41 and the conductive pattern 42. The second electrical path EP2 may be omitted. The second point P2 may refer to a portion among the side metal 41 in physical contact with the conductive pattern 42.

According to various embodiments, an integrated or single metal structure or member (e.g., a single continuous metal structure or metal member, or a complete metal structure or metal member) including the side metal 41 and the conductive pattern 42 may be provided (or formed). The second electrical path EP2 may be omitted. The second point P2 may refer to a boundary portion between the side metal 41 and the conductive pattern 42.

According to various embodiments, the wireless communication circuit 43 may be electrically connected to the side metal 41. The wireless communication circuit 43 may, for example, include the wireless communication module 192 of FIG. 1. The wireless communication circuit 43 may, for example, include a wireless communication processor (CP).

According to various embodiments, the wireless communication circuit 43 may be electrically connected to the side metal 41 through a first electrical path EP1. The first electrical path EP1 may include one or more conductive members, one or more conductive structures, or one or more conductive paths between the side metal 41 and the wireless communication circuit 43, or a combination thereof.

According to various embodiments, the wireless communication circuit 43 may be disposed on the first printed circuit board 35 of FIG. 3 or the second printed circuit board 36 of FIG. 3.

According to various embodiments, the wireless communication circuit 43 may provide (or feed) an electromagnetic signal (or, a radio signal, an RF signal, or a radiation current) to the side metal 41 through the first electrical path EP1.

According to various embodiments, the wireless communication circuit 43 may provide (or feed) the electromagnetic signal to a first point P1 on the side metal 41 through the first electrical path EP1. The first point P1 on the side metal 41 electrically connected to the first electrical path EP1 may be referred to as a 'feeding point'.

According to various embodiments, when the wireless communication circuit 43 provides (or feeds) the electromagnetic signal (or, the radio signal, the RF signal, or the radiation current) to the first electrical path EP1, a combination of the side metal 41 and the conductive pattern 42 (hereinafter referred to as an 'antenna structure 40') may operate as an antenna radiator (also referred to as a resonator). The side metal 41 among the antenna structure 40 is referred to as a first antenna radiator (also referred to as a first radiating portion), and the conductive pattern 42 among the antenna structure 40 may also be referred to as a second antenna radiator (also referred to as a second radiating portion).

According to various embodiments, the antenna structure 40 may be defined or interpreted by further including the second electrical path EP2.

According to various embodiments, an antenna ground G may be electrically connected to the side metal 41.

According to various embodiments, the antenna ground G may be electrically connected to the side metal 41 through a third electrical path EP3. The third electrical path EP3 may include one or more conductive members, one or more conductive structures, or one or more conductive paths between the antenna ground G and the side metal 41, or a combination thereof.

According to various embodiments, the third electrical path EP3 may be electrically connected to a third point P3 on the side metal 41. The third point P3 on the side metal 41 electrically connected to the third electrical path EP3 may be referred to as a 'grounding point'.

According to various embodiments, the antenna ground G may contribute to securing antenna radiation performance (or, radio wave transmission and reception performance or communication performance) and/or securing coverage with respect to the antenna structure 40.

According to various embodiments, the antenna ground G may exert an electromagnetic influence (e.g., electromagnetic force or radiation of radio waves) so that a beam pattern (or radiation pattern) radiated from the antenna structure 40 may be provided in a form capable of securing and/or improving radio wave transmission and reception performance in a designated direction.

According to various embodiments, the antenna ground G may contribute to providing a beam pattern in which the antenna structure 40 has directivity with respect to a space in the designated direction.

According to various embodiments, when the wireless communication circuit 43 provides (or feeds) the electromagnetic signal (or, the radio signal, the RF signal, or the radiation current) to the first electrical path EP1, a signal path through which the electromagnetic signal flows may be formed between the first point P1 and the second point P2 on the antenna structure 40. When the electromagnetic signal (or feed) is provided from the wireless communication circuit 43 to the first point P1, a radiation field (also referred to as an electromagnetic field) (or, a beam pattern or a radiation pattern) may be provided (or formed) through the signal path. The radiation field may have a resonance frequency corresponding to an electrical length (e.g., a length represented by a ratio of wavelength) possessed by the signal path.

According to various embodiments, when the wireless communication circuit 43 provides (or feeds) the electromagnetic signal (or, the radio signal, the RF signal, or the radiation current) to the antenna structure 40 through the first electrical path EP1, an electromagnetic wave of a first polarized wave (polarized wave) may be radiated from the side metal 41 of the antenna structure 40, and an electromagnetic wave of a second polarized wave may be substantially radiated from the conductive pattern 42 of the antenna structure 40. When the wireless communication circuit 43 provides the electromagnetic signal to the antenna structure 40, the electromagnetic wave of the first polarized wave may be radiated from the side metal 41, and the electromagnetic wave of the second polarized wave may be radiated from the conductive pattern 42, by a current path (or a distribution of surface current) on the antenna structure 40.

According to various embodiments, the electromagnetic wave radiated from the antenna structure 40 during feeding may include a combined wave in which the first polarized wave radiated from the side metal 41 and the second polarized wave radiated from the conductive pattern 42 are combined.

According to various embodiments, the first polarized wave radiated from the side metal 41 of the antenna structure 40 during feeding may include a first linear polarized wave (also referred to as a first polarized wave component). The first linear polarized wave may be an electromagnetic wave propagating while vibrating in a first polarized wave direction 401. A polarized wave direction may be defined or interpreted as a polarity direction of an electric field with respect to a propagating direction (or transmission direction) of the electromagnetic wave radiated (or transmitted) from the antenna structure 40. The polarized wave direction is a direction in which the electric field vibrates (or, a direction parallel to a vector of the electric field), and may be perpendicular to the propagating direction of the electromagnetic wave.

According to various embodiments, the second polarized wave radiated from the conductive pattern 42 of the antenna structure 40 during feeding may include a second linear polarized wave (also referred to as a second polarized wave component). The second linear polarized wave may be an electromagnetic wave propagating while vibrating in a second polarized wave direction 402.

According to various embodiments, during feeding, the first polarized wave direction 401 possessed by the first linear polarized wave radiated from the side metal 41 of the antenna structure 40 and the second polarized wave direction 402 possessed by the second linear polarized wave radiated from the conductive pattern 42 of the antenna structure 40 may be different from each other.

According to various embodiments, during feeding, the first polarized wave direction 401 possessed by the first linear polarized wave radiated from the side metal 41 of the antenna structure 40 and the second polarized wave direction 402 possessed by the second linear polarized wave radiated from the conductive pattern 42 of the antenna structure 40 may be substantially perpendicular. During feeding, a combined wave in which the first linear polarized wave and the second linear polarized wave having polarized wave directions perpendicular to each other are combined may be radiated from the antenna structure 40.

According to various embodiments, during feeding, the side metal 41 (e.g., the first antenna radiator) of the antenna structure 40 and the conductive pattern 42 (e.g., the second antenna radiator) of the antenna structure 40 may be utilized for polarization diversity to reduce fading. During feeding, the side metal 41 of the antenna structure 40 provides the first linear polarized wave having the first polarized wave direction 401, and the conductive pattern 42 of the antenna structure 40 provides the second linear polarized wave having the second polarized wave direction 402; thus, compared to a comparative example configured such that a linear polarized wave of a single direction is radiated from an antenna structure, radio wave transmission and reception performance (also referred to as communication performance) may be improved even if a polarization characteristic of a signal transmitted from a signal source, or an orientation (or posture) of the electronic device 2, changes.

According to various embodiments, during feeding, the antenna structure 40 may substantially radiate a circular polarized wave. The circular polarized wave radiated from the antenna structure 40 may be formed through combination of the first linear polarized wave radiated from the side metal 41 and the second linear polarized wave radiated from the conductive pattern 42. The first linear polarized wave and the second linear polarized wave may have polarized wave directions substantially perpendicular to each other. The first linear polarized wave and the second linear polarized wave may have substantially the same amplitude. A phase difference between the first linear polarized wave and the second linear polarized wave may be substantially 90 degrees. The combined wave in which the first linear polarized wave and the second linear polarized wave are combined may have a polarization characteristic of a circular polarized wave having an axial ratio (AR) of substantially 1. Radiation of the circular polarized wave from the antenna structure 40 may improve radio wave transmission and reception performance (also referred to as communication performance) even if the polarization characteristic of the signal transmitted from the signal source, or the orientation (or posture) of the electronic device 2, changes, compared to the comparative example configured such that the linear polarized wave is radiated from the antenna structure.

According to various embodiments, the side metal 41 of the antenna structure 40 may have a first current path (also referred to as a first signal path) 410. The first current path 410 may extend from the first point P1 on the side metal 41 to the second point P2 on the side metal 41. During feeding to the first point P1, a distribution of current (also referred to as a distribution of surface current) on the side metal 41 in which a radiation current substantially flows along the first current path 410 may be formed.

According to various embodiments, during feeding, the first current path 410 on the side metal 41 of the antenna structure 40 may generate the first linear polarized wave having the first polarized wave direction 401.

According to various embodiments, the conductive pattern 42 of the antenna structure 40 may have a second current path (also referred to as a second signal path) 420. The second current path 420 may, for example, extend from one end portion 420A electrically connected to the second electrical path EP2 to the other end portion 420B that is open. During feeding to the first point P1, a distribution of current on the conductive pattern 42 in which the radiation current substantially flows along the second current path 420 may be formed.

According to various embodiments, during feeding, the second current path 420 on the conductive pattern 42 of the antenna structure 40 may generate the second linear polarized wave having the second polarized wave direction 402.

According to various embodiments, the first current path 410 on the side metal 41 of the antenna structure 40 may have a first resonance length. The second current path 420 on the conductive pattern 42 of the antenna structure 40 may have a second resonance length. In various embodiments, the first resonance length and the second resonance length may be different. Due to a difference between the first resonance length and the second resonance length, there may be the phase difference between the first linear polarized wave radiated from the side metal 41 and the second linear polarized wave radiated from the conductive pattern 42.

According to various embodiments, the first current path 410 may extend in a direction substantially parallel to the first polarized wave direction 401.

According to various embodiments, the second current path 420 may extend in a direction at least partially different from the first current path 410. The second current path 420 may, for example, include a first partial path 421, a second partial path 422, and a third partial path 423 between the first partial path 421 and the second partial path 422. The first partial path 421 and the second partial path 422 may extend in a direction substantially parallel to the second polarized wave direction 402. The third partial path 423 may extend in a direction different from the first partial path 421 and the second partial path 422. The third partial path 423 may, for example, extend in a direction substantially parallel to the first polarized wave direction 401. A combination of the first partial path 421, the second partial path 422, and the third partial path 423 may cause the second linear polarized wave radiated from the conductive pattern 42 to have a phase difference (e.g., phase delay) of substantially 90 degrees with the first linear polarized wave radiated from the side metal 41. A combination of the first partial path 421, the second partial path 422, and the third partial path 423 may cause a radiation current flowing in the conductive pattern 42 to have a phase difference (e.g., phase delay) of substantially 90 degrees with a radiation current flowing in the side metal 41.

According to various embodiments, the conductive pattern 42 is an antenna element added to the side metal 41 to modify a distribution of the radiation current, and may be referred to as a 'stub', a 'branch', or a 'branch stub'.

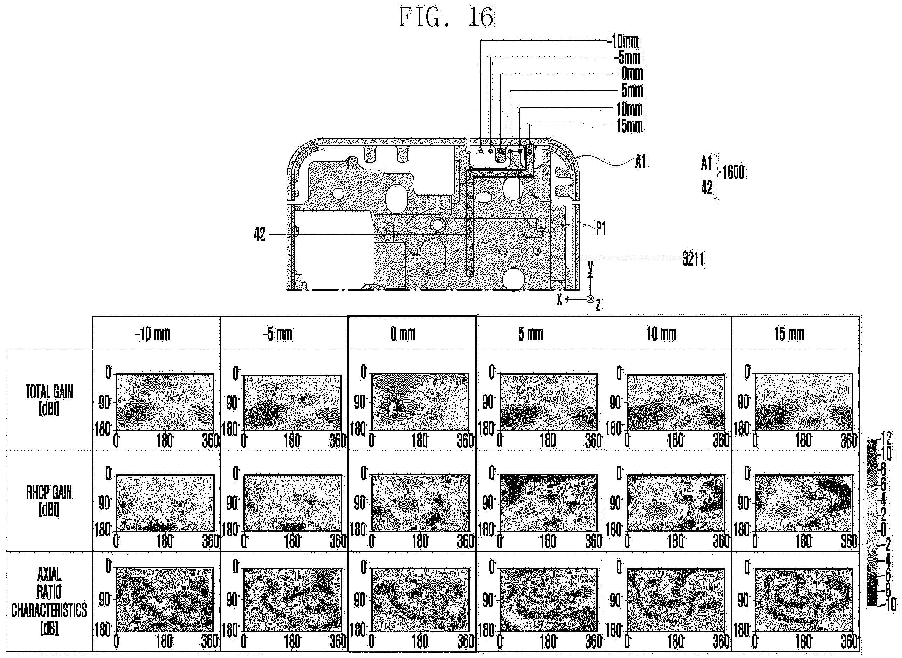

According to various embodiments, as a distance between the first point P1 and the second point P2 is closer, an electromagnetic wave radiated from the antenna structure 40 during feeding may have more polarization characteristics of a circular polarized wave. As the distance between the first point P1 and the second point P2 is closer, the electromagnetic wave radiated from the antenna structure 40 may have more the polarization characteristics of the circular polarized wave because a current path through which the radiation current provided (or fed) to the first point P1 flows from the first point P1 to the conductive pattern 42 may be reduced. In various embodiments, the first point P1 and the second point P2 may substantially coincide. A case where the electromagnetic wave radiated from the antenna structure 40 has more the polarization characteristics of the circular polarized wave when the first point P1 and the second point P2 substantially coincide will be described later with reference to FIG. 16.

According to various embodiments, the electronic device 2 may include a first matching circuit M1. The first matching circuit M1 may be disposed on a first electrical path EP1 or may be electrically connected to the first electrical path EP1.

According to various embodiments, the electronic device 2 may include a third matching circuit M3. The third matching circuit M3 may be disposed in a third electrical path EP3 or may be electrically connected to the third electrical path EP3.

According to various embodiments, the first matching circuit M1 and/or the third matching circuit M3 may adjust a frequency of the antenna structure 40 so that resonance may occur in, for example, a selected or designated frequency band. The first matching circuit M1 and/or the third matching circuit M3 may, for example, shift a resonance frequency of the antenna structure 40 to a designated frequency, or shift the resonance frequency by a designated amount.

According to various embodiments, the first matching circuit M1 and/or the third matching circuit M3 may provide (or form) impedance matching. The first matching circuit M1 and/or the third matching circuit M3 may reduce transmission loss through the impedance matching.

According to various embodiments, the first matching circuit M1 or the third matching circuit M3 may include an electrical element having components such as inductance, capacitance, or conductance. The first matching circuit M1 or the third matching circuit M3 may include, for example, various elements such as a lumped element or a passive element.

According to various embodiments, the wireless communication circuit 43 may be configured to transmit and/or receive a signal in a frequency band of satellite communication through the antenna structure 40.

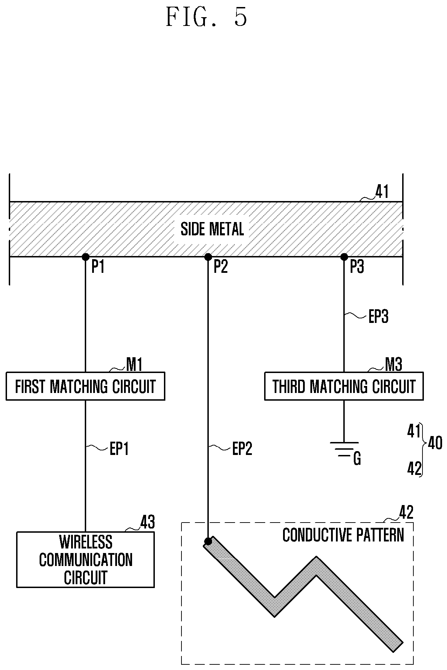

FIG. 5 is a block diagram regarding a portion of the electronic device 2 according to various embodiments of the present disclosure.

In relation to FIG. 5, it may be understood in the present disclosure to contemplate and include all combinations of disclosed features and/or embodiments. All combinations of features described below with reference to FIG. 5 may be considered to be included in the present disclosure as specific examples.

With reference to FIG. 5, the electronic device 2 may include a side metal 41, a conductive pattern 42, a wireless communication circuit 43, and an antenna ground G. Descriptions for some components identical to reference numerals illustrated in FIG. 4 are omitted.

According to various embodiments, the conductive pattern 42 may be implemented to be tilted compared to the example of FIG. 4, so that a second linear polarized wave radiated from the conductive pattern 42 has substantially the same phase as a first linear polarized wave radiated from the side metal 41.

According to various embodiments, the conductive pattern 42 may be implemented to be tilted compared to the example of FIG. 4, so that an elliptically polarized wave is radiated from the antenna structure 40 during feeding. The elliptically polarized wave may be formed through combination of the first linear polarized wave radiated from the side metal 41 and the second linear polarized wave radiated from the conductive pattern 42 during feeding. The first linear polarized wave and the second linear polarized wave may have different amplitudes.

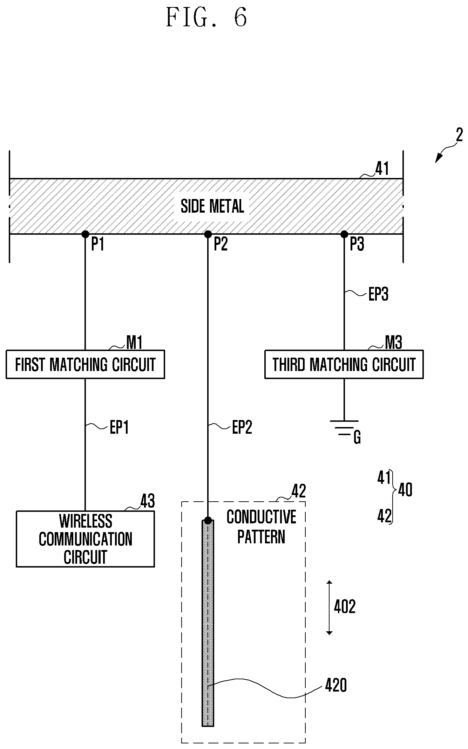

FIG. 6 is a block diagram regarding a portion of the electronic device 2 according to various embodiments of the present disclosure.

In relation to FIG. 6, it may be understood in the present disclosure to contemplate and include all combinations of disclosed features and/or embodiments. All combinations of features described below with reference to FIG. 6 may be considered to be included in the present disclosure as specific examples.

With reference to FIG. 6, the electronic device 2 may include the side metal 41, the conductive pattern 42, the wireless communication circuit 43, and the antenna ground G. Descriptions for some components identical to reference numerals illustrated in FIG. 4 are omitted.

According to various embodiments, a second current path 420 of the conductive pattern 42 may extend to a corresponding length in a direction substantially parallel to a second polarized wave direction 402, so that the second linear polarized wave radiated from the conductive pattern 42 has substantially the same phase as the first linear polarized wave radiated from the side metal 41.

According to various embodiments, the second current path 420 of the conductive pattern 42 may extend to a corresponding length in a direction substantially parallel to the second polarized wave direction 402, so that the elliptically polarized wave is radiated from the antenna structure 40 during feeding. The elliptically polarized wave may be formed through combination of the first linear polarized wave radiated from the side metal 41 and the second linear polarized wave radiated from the conductive pattern 42 during feeding. The first linear polarized wave and the second linear polarized wave may have different amplitudes.

According to various embodiments, characteristics (e.g., a resonance frequency, a polarized wave direction, axial ratio characteristics, or phase difference characteristics) possessed by an electromagnetic wave radiated from the antenna structure 40 during feeding may vary according to a shape of the side metal 41 (or a first current path 410), a position of the first point P1 on the side metal 41, a position of the second point P2 on the side metal 42, a position of a third point P3 on the side metal 41, a shape of the conductive pattern 42 (or the second current path 420), and/or a relative shape and position between the side metal 41 and the conductive pattern 42. It is not limited to the examples of FIG. 4, 5, or 6.

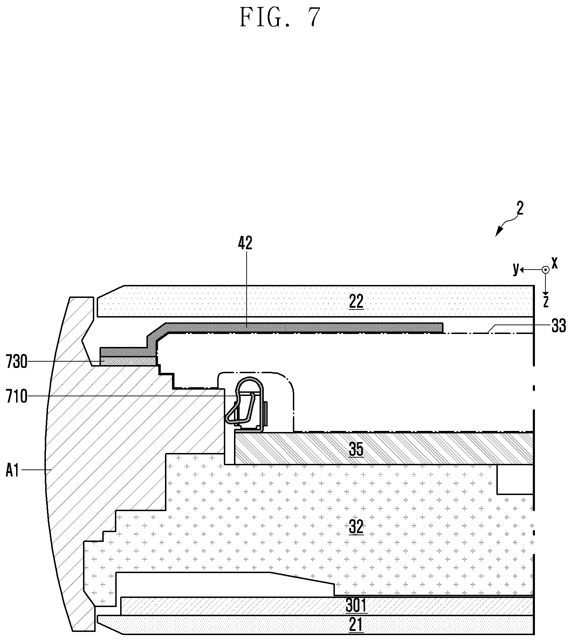

FIG. 7 is a cross-sectional view of the electronic device 2 taken along line C-C' of FIG. 2 according to various embodiments of the present disclosure.

In relation to FIG. 7, it may be understood in the present disclosure to contemplate and include all combinations of disclosed features and/or embodiments. All combinations of features described below with reference to FIG. 7 may be considered to be included in the present disclosure as specific examples.

With reference to FIG. 7, the electronic device 2 may include the front plate 21, the rear plate 22, the first supporting portion (also referred to as a supporting plate) 32, the display module 301, the first printed circuit board 35, a first metal A1, the conductive pattern 42, the second supporting portion 33, a first flexible conductor (also referred to as a first flexible conductive portion or a first flexible conductive member) 710, and/or a conductive adhesive material (or a conductive bonding material) 730. Descriptions for some components identical to reference numerals illustrated in FIG. 3, 4, 5, or 6 are omitted.

According to various embodiments, the first flexible conductor 710 may be disposed on or coupled to the first printed circuit board 35. The first flexible conductor 710 may be elastically in contact with the first metal A1. The wireless communication circuit (e.g., the wireless communication circuit 43 of FIG. 4, 5, or 6) disposed on the first printed circuit board 35 may be electrically connected to the first metal A1 through the first flexible conductor 710. The first flexible conductor 710 may, for example, include a conductive clip (e.g., a conductive structure including an elastic structure), but is not limited thereto, and may include a pogo-pin, a spring, conductive poron, conductive rubber, conductive tape, or a conductive connector. The wireless communication circuit may provide (or feed) an electromagnetic signal (or, a radio signal, an RF signal, or a radiation current) to the first metal A1 through the first flexible conductor 710. The first electrical path EP1 of FIG. 4, 5, or 6 may, for example, include the first flexible conductor 710, and a conductive path among the first printed circuit board 35 that electrically connects the first flexible conductor 710 and the wireless communication circuit. The first flexible conductor 710 may be physically in contact with the first point P1 (see FIG. 4, 5, or 6) on the first metal A1.

According to various embodiments, the conductive pattern 42 may be electrically and physically connected to the first metal A1 through the conductive adhesive material 730. The second electrical path EP2 of FIG. 4, 5, or 6 may include the conductive adhesive material 730. The conductive adhesive material 730 may be physically in contact with the second point P2 (see FIG. 4, 5, or 6) on the first metal A1.

According to various embodiments, the conductive pattern 42 may be disposed on a non-conductor of the second supporting portion 33. The conductive pattern 42 may, for example, be disposed on the non-conductor of the second supporting portion 33 through LDS. A position where the conductive pattern 42 is disposed may be otherwise various. In various embodiments, the electronic device 2 may include a conductive pattern disposed on a non-conductor of the third supporting portion 34 of FIG. 3 in replacement of or in addition to the conductive pattern 42 disposed on the non-conductor of the second supporting portion 33.

According to various embodiments, the first metal A1 may be electrically connected to a first ground area (not separately illustrated) included in the first printed circuit board 35. For example, a third flexible conductor (not separately illustrated) disposed on the first printed circuit board 35 is electrically connected to the first ground area of the first printed circuit board 35, and may be elastically in contact with the first metal A1. The first ground area may be included in the antenna ground G of FIG. 4, 5, or 6. The third electrical path EP3 of FIG. 4, 5, or 6 may, for example, include the third flexible conductor, and a conductive path among the first printed circuit board 35 that electrically connects the third flexible conductor and the first ground area. The third flexible conductor may be physically in contact with the third point P3 (see FIG. 4, 5, or 6) on the first metal A1.

According to various embodiments, when the wireless communication circuit provides (or feeds) the electromagnetic signal (or, the radio signal, the RF signal, or the radiation current) to the first metal A1 through the first flexible conductor 710, a combined wave (e.g., a circular polarized wave or an elliptically polarized wave) in which the first polarized wave radiated from the first metal A1 and the second polarized wave radiated from the conductive pattern 42 are combined may be formed.

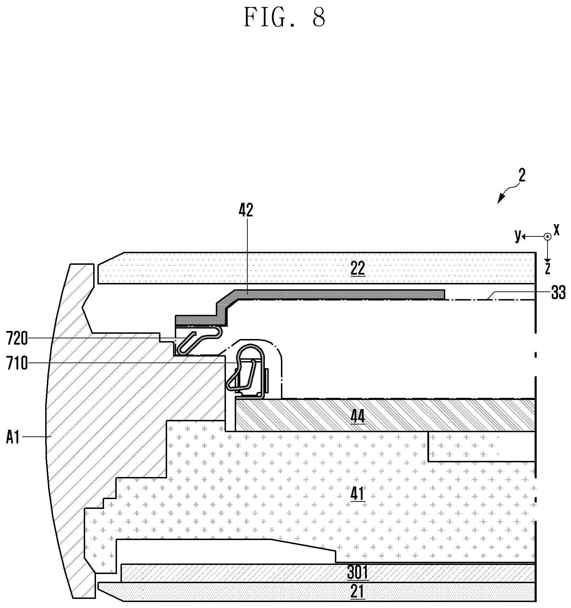

FIG. 8 is a cross-sectional view of the electronic device 2 taken along line C-C' of FIG. 2 according to various embodiments of the present disclosure.

In relation to FIG. 8, it may be understood in the present disclosure to contemplate and include all combinations of disclosed features and/or embodiments. All combinations of features described below with reference to FIG. 8 may be considered to be included in the present disclosure as specific examples.

With reference to FIG. 8, the electronic device 2 may include the front plate 21, the rear plate 22, the first supporting portion (also referred to as a supporting plate) 32, the display module 301, the first printed circuit board 35, the first metal A1, the conductive pattern 42, the second supporting portion 33, the first flexible conductor (also referred to as a first flexible conductive portion or a first flexible conductive member) 710, and/or a second flexible conductor (also referred to as a second flexible conductive portion or a second flexible conductive member) 720. Descriptions for some components identical to reference numerals illustrated in FIG. 3, 4, 5, 6, or 7 are omitted.

According to various embodiments, the conductive pattern 42 may be electrically connected to the first metal A1 through the second flexible conductor 720 disposed between the conductive pattern 42 and the first metal A1. The second flexible conductor 720 may, for example, include a conductive clip, but is not limited thereto, and may include a pogo-pin, a spring, conductive poron, conductive rubber, conductive tape, or a conductive connector. The second electrical path EP2 of FIG. 4, 5, or 6 may include the second flexible conductor 720.

According to various embodiments, the first metal A1 may be electrically connected to a first ground area (not separately illustrated) included in the first printed circuit board 35. For example, a third flexible conductor (not separately illustrated) disposed on the first printed circuit board 35 is electrically connected to the first ground area of the first printed circuit board 35, and may be elastically in contact with the first metal A1. The third flexible conductor may be physically in contact with the third point P3 (see FIG. 4, 5, or 6) on the first metal A1.

According to various embodiments, when the wireless communication circuit provides (or feeds) the electromagnetic signal (or, the radio signal, the RF signal, or the radiation current) to the first metal A1 through the first flexible conductor 710, a combined wave (e.g., a circular polarized wave or an elliptically polarized wave) in which the first polarized wave radiated from the first metal A1 and the second polarized wave radiated from the conductive pattern 42 are combined may be formed.

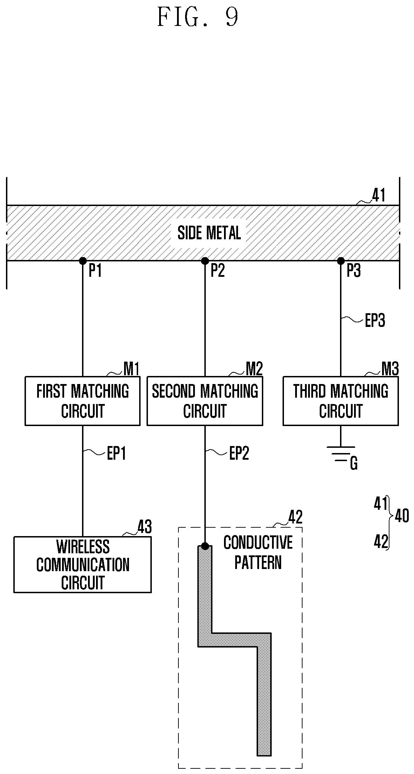

FIG. 9 is a block diagram regarding a portion of the electronic device 2 according to various embodiments of the present disclosure.

In relation to FIG. 9, it may be understood in the present disclosure to contemplate and include all combinations of disclosed features and/or embodiments. All combinations of features described below with reference to FIG. 9 may be considered to be included in the present disclosure as specific examples.

With reference to FIG. 9, the electronic device 2 may include the side metal 41, the conductive pattern 42, the wireless communication circuit 43, and/or the antenna ground G. Descriptions for some components identical to reference numerals illustrated in FIG. 4, 5, or 6 are omitted.

According to various embodiments, the side metal 41 may be electrically connected to the wireless communication circuit 43 (e.g., the wireless communication module 192 of FIG. 1) through the first electrical path EP1. The first electrical path EP1 may be electrically connected to the first point P1 (also referred to as a feeding point) on the side metal 41.

According to various embodiments, the side metal 41 may be electrically connected to the conductive pattern 42 through the second electrical path EP2. The second electrical path EP2 may be electrically connected to the second point P2 on the side metal 41.

According to various embodiments, the side metal 41 may be electrically connected to the antenna ground G through the third electrical path EP3. The third electrical path EP3 may be electrically connected to the third point P3 (also referred to as a grounding point) on the side metal 41.

According to various embodiments, the electronic device 2 may include a first matching circuit M1. The first matching circuit M1 may be disposed in a first electrical path EP1 or may be electrically connected to the first electrical path EP1.

According to various embodiments, the electronic device 2 may include a second matching circuit M2. The second matching circuit M2 may be disposed in the second electrical path EP2 or may be electrically connected to the second electrical path EP2. For example, the second electrical path EP2 includes a conductive path included in the first printed circuit board 35 (see FIG. 3), and the second matching circuit M2 may be disposed on the conductive path or may be electrically connected to the conductive path.

According to various embodiments, the second matching circuit M2 may include an electrical element having components such as inductance, capacitance, or conductance. The second matching circuit M2 may include, for example, various elements such as a lumped element or a passive element.

According to various embodiments, the electronic device 2 may include a third matching circuit M3. The third matching circuit M3 may be disposed in a third electrical path EP3 or may be electrically connected to the third electrical path EP3.

According to various embodiments, the first matching circuit M1, the second matching circuit M2, and/or the third matching circuit M3 may adjust a frequency of the antenna structure 40 so that resonance may occur in, for example, a selected or designated frequency band. The first matching circuit M1, the second matching circuit M2, and/or the third matching circuit M3 may, for example, shift a resonance frequency of the antenna structure 40 to a designated frequency, or shift the resonance frequency by a designated amount.

According to various embodiments, the first matching circuit M1, the second matching circuit M2, and/or the third matching circuit M3 may provide (or form) impedance matching. The first matching circuit M1, the second matching circuit M2, and/or the third matching circuit M3 may reduce transmission loss through the impedance matching.

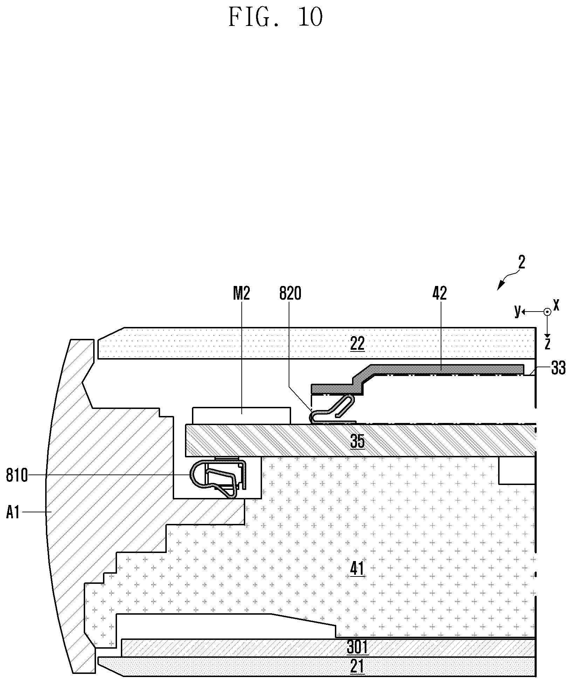

FIG. 10 is a cross-sectional view of the electronic device 2 taken along line C-C' of FIG. 2 according to various embodiments of the present disclosure.

In relation to FIG. 10, it may be understood in the present disclosure to contemplate and include all combinations of disclosed features and/or embodiments. All combinations of features described below with reference to FIG. 10 may be considered to be included in the present disclosure as specific examples.

With reference to FIG. 10, the electronic device 2 may include the front plate 21, the rear plate 22, the first supporting portion (also referred to as a supporting plate) 32, the display module 301, the first printed circuit board 35, the first metal A1, the conductive pattern 42, the second supporting portion 33, a fourth flexible conductor (also referred to as a fourth flexible conductive portion or a fourth flexible conductive member) 810, a fifth flexible conductor (also referred to as a fifth flexible conductive portion or a fifth flexible conductive member) 820, and/or the second matching circuit M2. Descriptions for some components identical to reference numerals illustrated in FIG. 7 are omitted.

According to various embodiments, the fourth flexible conductor 810 may be disposed between the first metal A1 and the first printed circuit board 35. The first metal A1 may be electrically connected to the first printed circuit board 35 through the fourth flexible conductor 810.

According to various embodiments, the fifth flexible conductor 820 may be disposed between the conductive pattern 42 and the first printed circuit board 35. The conductive pattern 42 may be electrically connected to the first printed circuit board 35 through the fifth flexible conductor 820.

According to various embodiments, the fourth flexible conductor 810 or the fifth flexible conductor 820 may include a conductive clip, but is not limited thereto, and may include a pogo-pin, a spring, conductive poron, conductive rubber, conductive tape, or a conductive connector.

According to various embodiments, the first printed circuit board 35 may include a conductive path (not separately illustrated) that electrically connects the fourth flexible conductor 810 and the fifth flexible conductor 820. The second electrical path EP2 of FIG. 9 may, for example, include the fourth flexible conductor 810, the fifth flexible conductor 820, and a conductive path among the first printed circuit board 35 that electrically connects the fourth flexible conductor 810 and the fifth flexible conductor 820.

According to various embodiments, the second matching circuit M2 may be disposed on the first printed circuit board 35. The second matching circuit M2 may be disposed on a conductive path (not separately illustrated) or electrically connected to a conductive path among the first printed circuit board 35 that electrically connects the fourth flexible conductor 810 and the fifth flexible conductor 820.

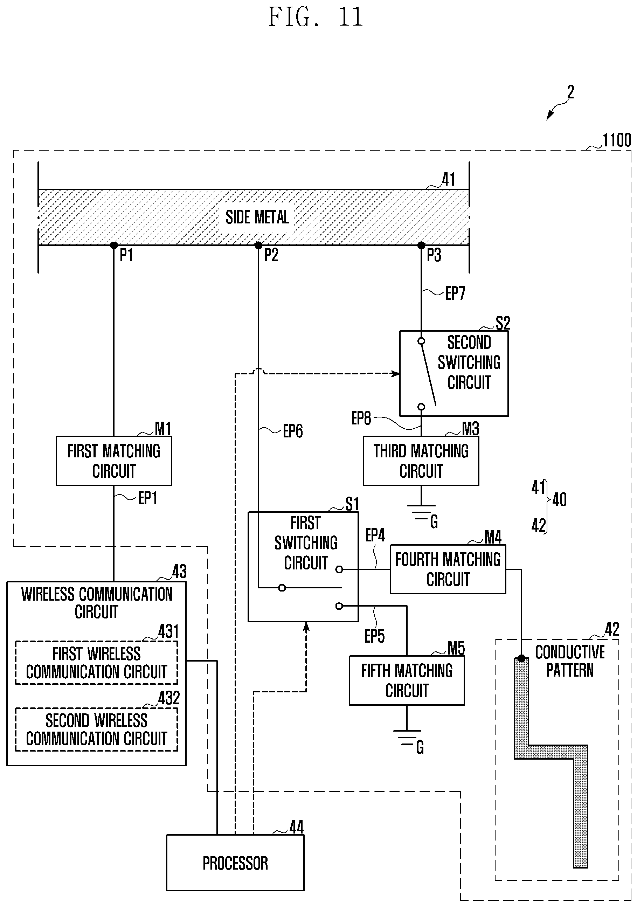

FIG. 11 is a block diagram regarding a portion of the electronic device 2 according to various embodiments of the present disclosure.

In relation to FIG. 11, it may be understood in the present disclosure to contemplate and include all combinations of disclosed features and/or embodiments. All combinations of features described below with reference to FIG. 11 may be considered to be included in the present disclosure as specific examples.

With reference to FIG. 11, the electronic device 2 may include the side metal 41, the conductive pattern (e.g., a stub or a branch stub) 42, the wireless communication circuit 43, the processor 44, the antenna ground G, a first switching circuit S1, and/or a second switching circuit S2. Descriptions for some components identical to reference numerals illustrated in FIG. 4, 5, 6, or 9 are omitted.

According to various embodiments, the side metal 41 may be electrically connected to the wireless communication circuit 43 through the first electrical path EP1. The first electrical path EP1 may be electrically connected to the first point P1 on the side metal 41.

According to various embodiments, the side metal 41 may be electrically connected to the first switching circuit S1 through a sixth electrical path EP6. The sixth electrical path EP6 may be electrically connected to the second point P2 on the side metal 41.

According to various embodiments, the first switching circuit S1 may be electrically connected to the conductive pattern 42 through a fourth electrical path EP4.

According to various embodiments, the first switching circuit S1 may be electrically connected to the antenna ground G through a fifth electrical path EP5. The first switching circuit S1 may, for example, be disposed on the first printed circuit board 35 (see FIG. 3).

According to various embodiments, the side metal 41 may be electrically connected to the second switching circuit S2 through a seventh electrical path EP7. The seventh electrical path EP7 may be electrically connected to the third point P3 on the side metal 41.

According to various embodiments, the second switching circuit S2 may be electrically connected to the antenna ground G through an eighth electrical path EP8. The second switching circuit S2 may, for example, be disposed on the first printed circuit board 35 (see FIG. 3).

According to various embodiments, the processor 44 (e.g., the processor 120 of FIG. 1) may be electrically connected to the wireless communication circuit 43, the first switching circuit S1, and the second switching circuit S2.

According to various embodiments, the processor 44 may load data received from the wireless communication circuit 43 into a volatile memory (e.g., the volatile memory 132 of FIG. 1), process instructions or data stored in the volatile memory, and store result data in a non-volatile memory (e.g., the non-volatile memory 134 of FIG. 1).

According to various embodiments, the processor 44 may be configured to control the first switching circuit S1 and the second switching circuit S2 according to a selected or designated frequency band (or, an operating frequency band or a used frequency band). The processor 44 may be configured to control the first switching circuit S1 and the second switching circuit S2 according to an application. The processor 44 may, for example, be configured to control the first switching circuit S1 and the second switching circuit S2 according to an operating frequency band (also referred to as a used frequency band) used by the application.

According to various embodiments, in a first operating frequency band (also referred to as a first used frequency band), the processor 44 may control the first switching circuit S1 and the second switching circuit S2 so that the wireless communication circuit 43 transmits and/or receives a signal through the antenna structure 40 including the side metal 41 and the conductive pattern 42. In the first operating frequency band, under control of the processor 44, the first switching circuit S1 may electrically connect the sixth electrical path EP6 and the fourth electrical path EP4, and electrically disconnect the sixth electrical path EP6 and the fifth electrical path EP5. In the first operating frequency band, the second point P2 of the side metal 41 may be electrically connected to the conductive pattern 42 by the first switching circuit S1. In the first operating frequency band, under control of the processor 44, the second switching circuit S2 may electrically connect the seventh electrical path EP7 and the eighth electrical path EP8. In the first operating frequency band, the third point P3 of the side metal 41 may be electrically connected to the antenna ground G by the second switching circuit S2.

According to various embodiments, the first operating frequency band may be a frequency band of satellite communication.

According to various embodiments, in a second operating frequency band (also referred to as a second used frequency band), the processor 44 may control the first switching circuit S1 and the second switching circuit S2 so that the wireless communication circuit 43 transmits and/or receives a signal through the side metal 41. In the second operating frequency band, under control of the processor 44, the first switching circuit S1 may electrically disconnect the sixth electrical path EP6 and the fourth electrical path EP4. In the second operating frequency band, under control of the processor 44, the first switching circuit S1 may electrically connect the sixth electrical path EP6 and the fifth electrical path EP5. In the second operating frequency band, the second point P2 of the side metal 41 may be electrically connected to the antenna ground G by the first switching circuit S1. In the second operating frequency band, under control of the processor 44, the second switching circuit S2 may electrically disconnect the sixth electrical path EP6 and the fifth electrical path EP5. When the wireless communication circuit 43 provides (or feeds) the electromagnetic signal (or, the radio signal, the RF signal, or the radiation current) to the first electrical path EP1, a first signal path through which the electromagnetic signal flows may be formed between the first point P1 electrically connected to the first electrical path EP1 among the side metal 41 and the second point P2 electrically connected to the antenna ground G. When the electromagnetic signal is provided (or fed) from the wireless communication circuit 43 to the first electrical path EP1, an electromagnetic field (also referred to as a radiation field) or a beam pattern of a first resonance frequency corresponding to an electrical length (e.g., a length represented by a ratio of wavelength) possessed by the first signal path may be provided (or formed).

According to various embodiments, in a third operating frequency band (also referred to as a third used frequency band), the processor 44 may control the first switching circuit S1 and the second switching circuit S2 so that the wireless communication circuit 43 transmits and/or receives a signal through the side metal 41. In the third operating frequency band, under control of the processor 44, the first switching circuit S1 may electrically disconnect the sixth electrical path EP6 and the fourth electrical path EP4. In the third operating frequency band, under control of the processor 44, the first switching circuit S1 may electrically disconnect the sixth electrical path EP6 and the fifth electrical path EP5. In the third operating frequency band, under control of the processor 44, the second switching circuit S2 may electrically connect the sixth electrical path EP6 and the fifth electrical path EP5. In the third operating frequency band, the third point P3 of the side metal 41 may be electrically connected to the antenna ground G by the second switching circuit S2. When the wireless communication circuit 43 provides (or feeds) the electromagnetic signal (or, the radio signal, the RF signal, or the radiation current) to the first electrical path EP1, a second signal path through which the electromagnetic signal flows may be formed between the first point P1 electrically connected to the first electrical path EP1 among the side metal 41 and the third point P3 electrically connected to the antenna ground G. When the electromagnetic signal is provided (or fed) from the wireless communication circuit 43 to the first electrical path EP1, an electromagnetic field (also referred to as a radiation field) or a beam pattern of a second resonance frequency corresponding to an electrical length (e.g., a length represented by a ratio of wavelength) possessed by the second signal path may be provided (or formed).

According to various embodiments, the wireless communication circuit 43 may include a first wireless communication circuit 431 and a second wireless communication circuit 432. The first wireless communication circuit 431 may be configured to transmit and/or receive a signal of the first operating frequency band through the antenna structure 40 including the side metal 41 and the conductive pattern 42. The second wireless communication circuit 432 may be configured to transmit and/or receive a signal of the second operating frequency band and/or a signal of the third operating frequency band through the side metal 41.

According to various embodiments, the first wireless communication circuit 431 may include a wireless communication circuit for satellite communication.

According to various embodiments, the electronic device 2 may include a first matching circuit M1. The first matching circuit M1 may be disposed in a first electrical path EP1 or may be electrically connected to the first electrical path EP1. The first matching circuit M1 may, for example, be disposed on the first printed circuit board 35 (see FIG. 3).

According to various embodiments, the electronic device 2 may include a third matching circuit M3. The third matching circuit M3 may be disposed in the eighth electrical path EP8 or may be electrically connected to the eighth electrical path EP8. The third matching circuit M3 may, for example, be disposed on the first printed circuit board 35 (see FIG. 3). When the seventh electrical path EP7 and the eighth electrical path EP8 are electrically connected by the second switching circuit S2, the third point P3 of the side metal 41 may be electrically connected to the antenna ground G through the third matching circuit M3.

According to various embodiments, the electronic device 2 may include a fourth matching circuit M4. The fourth matching circuit M4 may be disposed in the fourth electrical path EP4 or may be electrically connected to the fourth electrical path EP4. The fourth matching circuit M4 may, for example, be disposed on the first printed circuit board 35 (see FIG. 3). When the sixth electrical path EP6 and the fourth electrical path EP4 are electrically connected by the first switching circuit S1, the second point P2 of the side metal 41 may be electrically connected to the conductive pattern 42 through the fourth matching circuit M4.

According to various embodiments, the electronic device 2 may include a fifth matching circuit M5. The fifth matching circuit M5 may be disposed in the fifth electrical path EP5 or may be electrically connected to the fifth electrical path EP5. The fifth matching circuit M5 may, for example, be disposed on the first printed circuit board 35 (see FIG. 3). When the sixth electrical path EP6 and the fifth electrical path EP5 are electrically connected by the first switching circuit S1, the second point P2 of the side metal 41 may be electrically connected to the antenna ground G through the fifth matching circuit M5.

According to various embodiments, the first matching circuit M1, the second matching circuit M2, the third matching circuit M3, the fourth matching circuit M4, or the fifth matching circuit M5 may include an electrical element having components such as inductance, capacitance, or conductance. The first matching circuit M1, the second matching circuit M2, the third matching circuit M3, the fourth matching circuit M4, or the fifth matching circuit M5 may include, for example, various elements such as a lumped element or a passive element.

According to various embodiments, the first matching circuit M1, the third matching circuit M3, and/or the fourth matching circuit M4 may adjust a frequency of the antenna structure 40 so that resonance may occur in the first operating frequency band. The first matching circuit M1, the third matching circuit M3, and/or the fourth matching circuit M4 may, for example, shift a resonance frequency of the antenna structure 40 to a designated frequency, or shift the resonance frequency by a designated amount.

According to various embodiments, the first matching circuit M1, the third matching circuit M3, and/or the fourth matching circuit M4 may provide (or form) impedance matching in the first operating frequency band.

According to various embodiments, the first matching circuit M1 and/or the fifth matching circuit M5 may adjust a frequency of the side metal 41 so that resonance may occur in the second operating frequency band. The first matching circuit M1 and/or the fifth matching circuit M5 may, for example, shift the resonance frequency of the side metal 41 to a designated frequency, or shift the resonance frequency by a designated amount.

According to various embodiments, the first matching circuit M1 and/or the fifth matching circuit M5 may provide (or form) impedance matching in the second operating frequency band.

According to various embodiments, the first matching circuit M1 and/or the third matching circuit M3 may adjust the frequency of the side metal 41 so that resonance may occur in the third operating frequency band. The first matching circuit M1 and/or the third matching circuit M3 may, for example, shift the resonance frequency of the side metal 41 to a designated frequency, or shift the resonance frequency by a designated amount.

According to various embodiments, the first matching circuit M1 and/or the third matching circuit M3 may provide (or form) impedance matching in the third operating frequency band.

According to various embodiments, the electronic device 2 may include a plurality of antennas implemented at least partially identically to an antenna 1100 including the side metal 41, the conductive pattern 42, the first switching circuit S1, the second switching circuit S2, and at least one matching circuit (e.g., a first matching circuit M1, a second matching circuit M2, a third matching circuit M3, a fourth matching circuit M4, and a fifth matching circuit M5). The electronic device 2 may, for example, include a first antenna and a second antenna. The first antenna may include a first side metal and a first conductive pattern (e.g., the conductive pattern 42). The second antenna may include a second side metal and a second conductive pattern (e.g., the conductive pattern 42). The first side metal and the second side metal may, for example, each include two metals neighboring each other with a segment portion interposed therebetween among a plurality of metals A1, A2, A3, A4, A5, and A6 of a side 23 (see FIG. 2), but are not limited thereto. The first conductive pattern and the second conductive pattern may be in substantially the same shape or different shapes from each other.

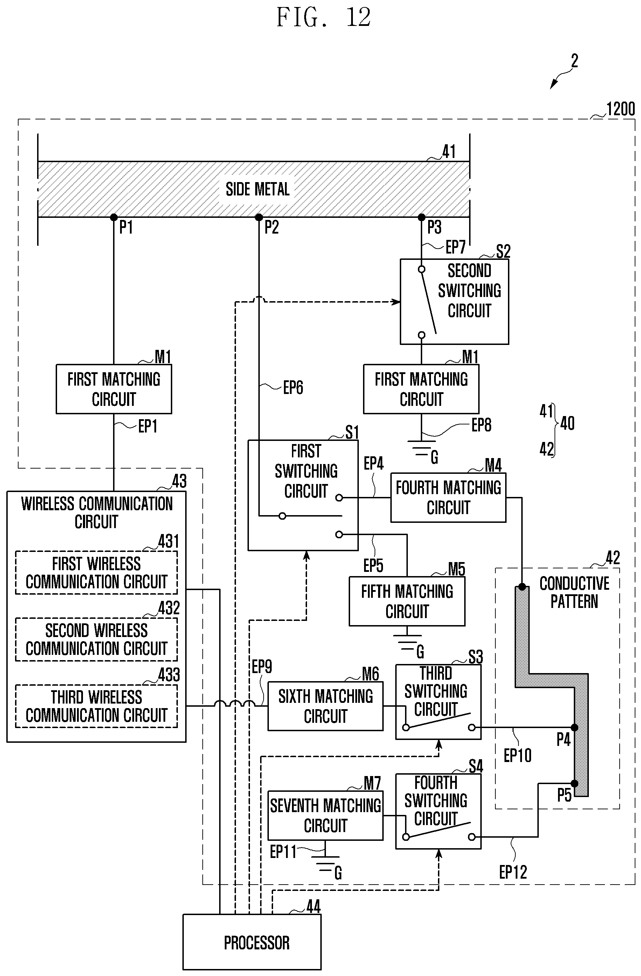

FIG. 12 is a block diagram regarding a portion of the electronic device 2 according to various embodiments of the present disclosure.

In relation to FIG. 12, it may be understood in the present disclosure to contemplate and include all combinations of disclosed features and/or embodiments. All combinations of features described below with reference to FIG. 12 may be considered to be included in the present disclosure as specific examples.

With reference to FIG. 12, the electronic device 2 may include the side metal 41, the conductive pattern (e.g., a stub or a branch stub) 42, the wireless communication circuit 43, the processor 44, the antenna ground G, the first switching circuit S1, the second switching circuit S2, a third switching circuit S3, a fourth switching circuit S4, a first electrical path EP1, a second electrical path EP2, a third electrical path EP3, a fourth electrical path EP4, a fifth electrical path EP5, a sixth electrical path EP6, a seventh electrical path EP7, an eighth electrical path EP8, a ninth electrical path EP9, a tenth electrical path EP10, an eleventh electrical path EP11, and/or a twelfth electrical path EP12. Descriptions for some components identical to reference numerals illustrated in FIG. 11 are omitted.

According to various embodiments, the wireless communication circuit 43 may be electrically connected to the third switching circuit S3 through the ninth electrical path EP9.

According to various embodiments, the third switching circuit S3 may be electrically connected to the conductive pattern 42 through the tenth electrical path EP10. The tenth electrical path EP10 may be electrically connected to a fourth point P4 on the conductive pattern 42.

According to various embodiments, the antenna ground G may be electrically connected to the fourth switching circuit S4 through the eleventh electrical path EP11.

According to various embodiments, the fourth switching circuit S4 may be electrically connected to the conductive pattern 42 through the twelfth electrical path EP12. The twelfth electrical path EP12 may be electrically connected to a fifth point P5 on the conductive pattern 42.

According to various embodiments, the processor 44 may be configured to control the first switching circuit S1, the second switching circuit S2, the third switching circuit S3, and the fourth switching circuit S4 according to a selected or designated frequency band (or, an operating frequency band or a used frequency band). The processor 44 may be configured to control the first switching circuit S1, the second switching circuit S2, the third switching circuit S3, and the fourth switching circuit S4 according to an application. The processor 44 may, for example, be configured to control the first switching circuit S1, the second switching circuit S2, the third switching circuit S3, and the fourth switching circuit S4 according to the operating frequency band (also referred to as a used frequency band) used by the application.

According to various embodiments, in a first operating frequency band, the processor 44 may control the first switching circuit S1, the second switching circuit S2, the third switching circuit S3, and the fourth switching circuit S4 so that the wireless communication circuit 43 transmits and/or receives a signal through the antenna structure 40 including the side metal 41 and the conductive pattern 42. In the first operating frequency band, under control of the processor 44, the first switching circuit S1 may electrically connect the sixth electrical path EP6 and the fourth electrical path EP4, and electrically disconnect the sixth electrical path EP6 and the fifth electrical path EP5. In the first operating frequency band, the second point P2 of the side metal 41 may be electrically connected to the conductive pattern 42 by the first switching circuit S1. In the first operating frequency band, under control of the processor 44, the second switching circuit S2 may electrically connect the seventh electrical path EP7 and the eighth electrical path EP8. In the first operating frequency band, the third point P3 of the side metal 41 may be electrically connected to the antenna ground G by the second switching circuit S2. In the first operating frequency band, under control of the processor 44, the third switching circuit S3 may electrically disconnect the ninth electrical path EP9 and the tenth electrical path EP10. In the first operating frequency band, under control of the processor 44, the fourth switching circuit S4 may electrically disconnect the eleventh electrical path EP11 and the twelfth electrical path EP12.

According to various embodiments, in a second operating frequency band, the processor 44 may control the first switching circuit S1, the second switching circuit S2, the third switching circuit S3, and the fourth switching circuit S4 so that the wireless communication circuit 43 transmits and/or receives a signal through the side metal 41. In the second operating frequency band, under control of the processor 44, the first switching circuit S1 may electrically disconnect the sixth electrical path EP6 and the fourth electrical path EP4. In the second operating frequency band, under control of the processor 44, the first switching circuit S1 may electrically connect the sixth electrical path EP6 and the fifth electrical path EP5. In the second operating frequency band, the second point P2 of the side metal 41 may be electrically connected to the antenna ground G by the first switching circuit S1. In the second operating frequency band, under control of the processor 44, the second switching circuit S2 may electrically disconnect the sixth electrical path EP6 and the fifth electrical path EP5. In the second operating frequency band, under control of the processor 44, the third switching circuit S3 may electrically disconnect the ninth electrical path EP9 and the tenth electrical path EP10. In the second operating frequency band, under control of the processor 44, the fourth switching circuit S4 may electrically disconnect the eleventh electrical path EP11 and the twelfth electrical path EP12. When the wireless communication circuit 43 provides (or feeds) the electromagnetic signal (or, the radio signal, the RF signal, or the radiation current) to the first electrical path EP1, a first signal path through which the electromagnetic signal flows may be formed between the first point P1 electrically connected to the first electrical path EP1 among the side metal 41 and the second point P2 electrically connected to the antenna ground G. When the electromagnetic signal is provided (or fed) from the wireless communication circuit 43 to the first electrical path EP1, an electromagnetic field (also referred to as a radiation field) or a beam pattern of a first resonance frequency corresponding to an electrical length (e.g., a length represented by a ratio of wavelength) possessed by the first signal path may be provided (or formed).

According to various embodiments, in a third operating frequency band (also referred to as a third used frequency band), the processor 44 may control the first switching circuit S1 and the second switching circuit S2 so that the wireless communication circuit 43 transmits and/or receives a signal through the side metal 41. In the third operating frequency band, under control of the processor 44, the first switching circuit S1 may electrically disconnect the sixth electrical path EP6 and the fourth electrical path EP4. In the third operating frequency band, under control of the processor 44, the first switching circuit S1 may electrically disconnect the sixth electrical path EP6 and the fifth electrical path EP5. In the third operating frequency band, under control of the processor 44, the second switching circuit S2 may electrically connect the sixth electrical path EP6 and the fifth electrical path EP5. In the third operating frequency band, the third point P3 of the side metal 41 may be electrically connected to the antenna ground G by the second switching circuit S2. In the third operating frequency band, under control of the processor 44, the third switching circuit S3 may electrically disconnect the ninth electrical path EP9 and the tenth electrical path EP10. In the third operating frequency band, under control of the processor 44, the fourth switching circuit S4 may electrically disconnect the eleventh electrical path EP11 and the twelfth electrical path EP12. When the wireless communication circuit 43 provides (or feeds) the electromagnetic signal (or, the radio signal, the RF signal, or the radiation current) to the first electrical path EP1, a second signal path through which the electromagnetic signal flows may be formed between the first point P1 electrically connected to the first electrical path EP1 among the side metal 41 and the third point P3 electrically connected to the antenna ground G. When the electromagnetic signal is provided (or fed) from the wireless communication circuit 43 to the first electrical path EP1, an electromagnetic field (also referred to as a radiation field) or a beam pattern of a second resonance frequency corresponding to an electrical length (e.g., a length represented by a ratio of wavelength) possessed by the second signal path may be provided (or formed).

According to various embodiments, in a fourth operating frequency band (also referred to as a fourth used frequency band), the processor 44 may control the first switching circuit S1, the second switching circuit S2, the third switching circuit S3, and the fourth switching circuit S4 so that the wireless communication circuit 43 transmits and/or receives a signal through the conductive pattern 42. In the fourth operating frequency band, under control of the processor 44, the first switching circuit S1 may electrically disconnect the sixth electrical path EP6 and the fourth electrical path EP4. In the fourth operating frequency band, under control of the processor 44, the first switching circuit S1 may electrically disconnect the sixth electrical path EP6 and the fifth electrical path EP5. In the fourth operating frequency band, under control of the processor 44, the second switching circuit S2 may electrically disconnect the sixth electrical path EP6 and the fifth electrical path EP5. In the fourth operating frequency band, under control of the processor 44, the third switching circuit S3 may electrically connect the ninth electrical path EP9 and the tenth electrical path EP10. In the fourth operating frequency band, the fourth point P4 of the conductive pattern 42 may be electrically connected to the wireless communication circuit 43 by the third switching circuit S3. In the fourth operating frequency band, under control of the processor 44, the fourth switching circuit S4 may electrically connect the eleventh electrical path EP11 and the twelfth electrical path EP12. In the fourth operating frequency band, the fifth point P5 of the conductive pattern 42 may be electrically connected to the antenna ground G by the fourth switching circuit S4. When the wireless communication circuit 43 provides (or feeds) the electromagnetic signal (or, the radio signal, the RF signal, or the radiation current) to the ninth electrical path EP9, a third signal path through which the electromagnetic signal flows may be formed between the fourth point P4 electrically connected to the tenth electrical path EP10 among the conductive pattern 42 and the fifth point P5 electrically connected to the antenna ground G. When the electromagnetic signal is provided (or fed) from the wireless communication circuit 43 to the ninth electrical path EP9, an electromagnetic field (also referred to as a radiation field) or a beam pattern of a third resonance frequency corresponding to an electrical length (e.g., a length represented by a ratio of wavelength) possessed by the third signal path may be provided (or formed).

According to various embodiments, the wireless communication circuit 43 may include a first wireless communication circuit 431, a second wireless communication circuit 432, and a third wireless communication circuit 433. The first wireless communication circuit 431 may be configured to transmit and/or receive a signal of the first operating frequency band through the antenna structure 40 including the side metal 41 and the conductive pattern 42. The second wireless communication circuit 432 may be configured to transmit and/or receive a signal of the second operating frequency band and a signal of the third operating frequency band through the side metal 41. The third wireless communication circuit 433 may be configured to transmit and/or receive a signal of the fourth operating frequency band through the conductive pattern 42.

According to various embodiments, the electronic device 2 may include the first matching circuit M1, the second matching circuit M2, the third matching circuit M3, the fourth matching circuit M4, the fifth matching circuit M5, a sixth matching circuit M6, and/or a seventh matching circuit M7.

According to various embodiments, the sixth matching circuit M6 may be disposed in the ninth electrical path EP9 or may be electrically connected to the ninth electrical path EP9. The sixth matching circuit M6 may, for example, be disposed on the first printed circuit board 35 (see FIG. 3). When the ninth electrical path EP9 and the tenth electrical path EP10 are electrically connected by the third switching circuit S3, the fourth point P4 of the conductive pattern 32 may be electrically connected to the wireless communication circuit 43 through the sixth matching circuit M6.

According to various embodiments, the seventh matching circuit M7 may be disposed in the eleventh electrical path EP11 or may be electrically connected to the eleventh electrical path EP11. The seventh matching circuit M7 may, for example, be disposed on the first printed circuit board 35 (see FIG. 3). When the eleventh electrical path EP11 and the twelfth electrical path EP12 are electrically connected by the fourth switching circuit S4, the fifth point P5 of the conductive pattern 32 may be electrically connected to the antenna ground G through the seventh matching circuit M7.

According to various embodiments, the sixth matching circuit M6 or the seventh matching circuit M7 may include an electrical element having components such as inductance, capacitance, or conductance. The sixth matching circuit M6 or the seventh matching circuit M7 may include, for example, various elements such as a lumped element or a passive element.

According to various embodiments, the sixth matching circuit M6 and/or the seventh matching circuit M7 may adjust a frequency of the conductive pattern 42 so that resonance may occur in the fourth operating frequency band. The sixth matching circuit M6 and/or the seventh matching circuit M7 may, for example, shift the resonance frequency of the conductive pattern 42 to a designated frequency, or shift the resonance frequency by a designated amount.

According to various embodiments, the sixth matching circuit M6 and/or the seventh matching circuit M7 may provide (or form) impedance matching in the fourth operating frequency band.

According to various embodiments, the electronic device 2 may include a plurality of antennas implemented at least partially identically to an antenna 1200 including the side metal 41, the conductive pattern 42, the first switching circuit S1, the second switching circuit S2, the third switching circuit S3, the fourth switching circuit S4, and at least one matching circuit (e.g., the first matching circuit M1, the second matching circuit M2, the third matching circuit M3, the fourth matching circuit M4, the fifth matching circuit M5, the sixth matching circuit M6, and the seventh matching circuit M7). The electronic device 2 may, for example, include a first antenna and a second antenna. The first antenna may include a first side metal and a first conductive pattern (e.g., the conductive pattern 42). The second antenna may include a second side metal and a second conductive pattern (e.g., the conductive pattern 42). The first side metal and the second side metal may, for example, each include two metals neighboring each other with a segment portion interposed therebetween among a plurality of metals A1, A2, A3, A4, A5, and A6 of a side 23 (see FIG. 2), but are not limited thereto. The first conductive pattern and the second conductive pattern may be in substantially the same shape or different shapes from each other.

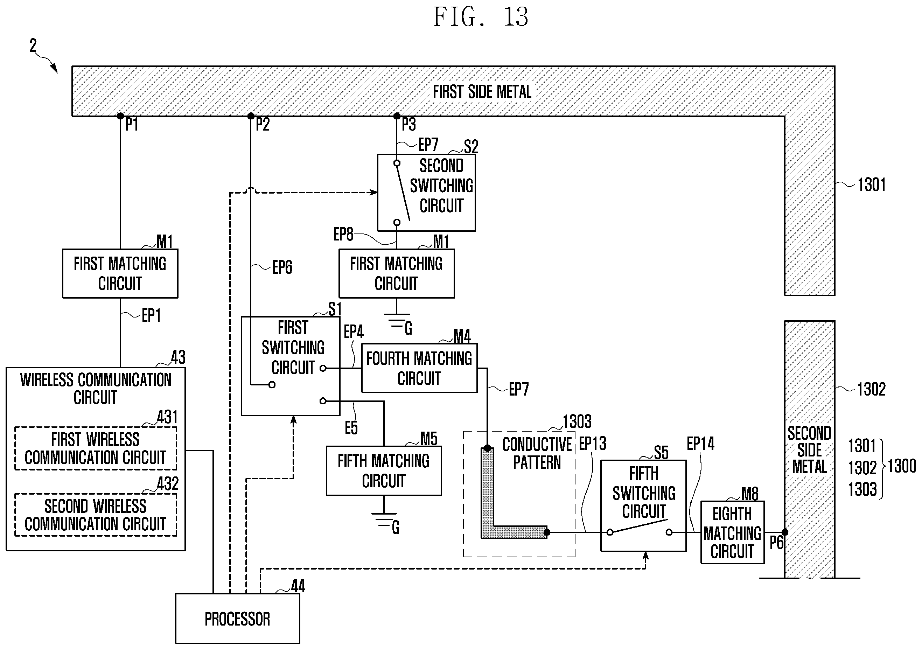

FIG. 13 is a block diagram regarding a portion of the electronic device 2 according to various embodiments of the present disclosure.

In relation to FIG. 13, it may be understood in the present disclosure to contemplate and include all combinations of disclosed features and/or embodiments. All combinations of features described below with reference to FIG. 13 may be considered to be included in the present disclosure as specific examples.

With reference to FIG. 13, the electronic device 2 may include a first side metal 1301, a second side metal 1302, a conductive pattern (e.g., a stub or a branch stub) 1303, the wireless communication circuit 43, the processor 44, the antenna ground G, the first switching circuit S1, the second switching circuit S2, a fifth switching circuit S5, the first electrical path EP1, the second electrical path EP2, the third electrical path EP3, the fourth electrical path EP4, the fifth electrical path EP5, the sixth electrical path EP6, the seventh electrical path EP7, the eighth electrical path EP8, a thirteenth electrical path EP13, and/or a fourteenth electrical path EP14. Descriptions for some components identical to reference numerals illustrated in FIG. 11 or 12 are omitted.

According to various embodiments, the first side metal 1301 (e.g., the side metal 41 of FIG. 11 or 12) and the second side metal 1302 may each include two metals neighboring each other with a segment portion interposed therebetween among the plurality of metals A1, A2, A3, A4, A5, and A6 of the side 23 (see FIG. 2), but are not limited thereto. For example, the first side metal 1301 may include the first metal A1 of FIG. 2, and the second side metal 1302 may include the second metal A2 of FIG. 2.

According to various embodiments, the conductive pattern 1303 (e.g., the conductive pattern 42 of FIG. 11 or 12) may be electrically connected to the fifth switching circuit S5 through the thirteenth electrical path EP13.

According to various embodiments, the fifth switching circuit S5 may be electrically connected to the second side metal 1302 through the fourteenth electrical path EP14. The fourteenth electrical path EP14 may be electrically connected to a sixth point P6 on the second side metal 1302.

According to various embodiments, the processor 44 may be configured to control the first switching circuit S1, the second switching circuit S2, and the fifth switching circuit S5 according to a selected or designated frequency band (or, the operating frequency band or the used frequency band). The processor 44 may be configured to control the first switching circuit S1, the second switching circuit S2, and the fifth switching circuit S5 according to an application. The processor 44 may, for example, be configured to control the first switching circuit S1, the second switching circuit S2, and the fifth switching circuit S5 according to the operating frequency band (also referred to as a used frequency band) used by the application.

According to various embodiments, in the first operating frequency band, the processor 44 may control the first switching circuit S1, the second switching circuit S2, and the fifth switching circuit S5 so that the wireless communication circuit 43 transmits and/or receives a signal through an antenna structure 1300 including the first side metal 1301, the second side metal 1302, and the conductive pattern 1303. In the first operating frequency band, under control of the processor 44, the first switching circuit S1 may electrically connect the sixth electrical path EP6 and the fourth electrical path EP4, and electrically disconnect the sixth electrical path EP6 and the fifth electrical path EP5. In the first operating frequency band, the second point P2 of the first side metal 1301 may be electrically connected to the conductive pattern 1303 by the first switching circuit S1. In the first operating frequency band, under control of the processor 44, the second switching circuit S2 may electrically connect the seventh electrical path EP7 and the eighth electrical path EP8. In the first operating frequency band, the third point P3 of the first side metal 1301 may be electrically connected to the antenna ground G by the second switching circuit S2. In the first operating frequency band, under control of the processor 44, the fifth switching circuit S5 may electrically disconnect the thirteenth electrical path EP13 and the fourteenth electrical path EP14. In the first operating frequency band, the sixth point P6 of the second side metal 1302 may be electrically connected to the conductive pattern 1302 by the fifth switching circuit S5. When the wireless communication circuit 43 provides (or feeds) the electromagnetic signal (or, the radio signal, the RF signal, or the radiation current) through the first electrical path EP1, a combined wave (e.g., a circular polarized wave) in which the first polarized wave radiated from the first side metal 1301, the second polarized wave radiated from the conductive pattern 1303, and a third polarized wave radiated from the second side metal 1302 are combined may be formed.

According to various embodiments, in a second operating frequency band, the processor 44 may control the first switching circuit S1, the second switching circuit S2, the third switching circuit S3, and the fourth switching circuit S4 so that the wireless communication circuit 43 transmits and/or receives a signal through the side metal 41. In the second operating frequency band, under control of the processor 44, the first switching circuit S1 may electrically disconnect the sixth electrical path EP6 and the fourth electrical path EP4. In the second operating frequency band, under control of the processor 44, the first switching circuit S1 may electrically connect the sixth electrical path EP6 and the fifth electrical path EP5. In the second operating frequency band, the second point P2 of the side metal 41 may be electrically connected to the antenna ground G by the first switching circuit S1. In the second operating frequency band, under control of the processor 44, the second switching circuit S2 may electrically disconnect the sixth electrical path EP6 and the fifth electrical path EP5. In the second operating frequency band, under control of the processor 44, the fifth switching circuit S5 may electrically disconnect the thirteenth electrical path EP13 and the fourteenth electrical path EP14. When the wireless communication circuit 43 provides (or feeds) the electromagnetic signal (or, the radio signal, the RF signal, or the radiation current) to the first electrical path EP1, a first signal path through which the electromagnetic signal flows may be formed between the first point P1 electrically connected to the first electrical path EP1 among the side metal 41 and the second point P2 electrically connected to the antenna ground G. When the electromagnetic signal is provided (or fed) from the wireless communication circuit 43 to the first electrical path EP1, an electromagnetic field (also referred to as a radiation field) or a beam pattern of a first resonance frequency corresponding to an electrical length (e.g., a length represented by a ratio of wavelength) possessed by the first signal path may be provided (or formed).

According to various embodiments, in a third operating frequency band (also referred to as a third used frequency band), the processor 44 may control the first switching circuit S1 and the second switching circuit S2 so that the wireless communication circuit 43 transmits and/or receives a signal through the side metal 41. In the third operating frequency band, under control of the processor 44, the first switching circuit S1 may electrically disconnect the sixth electrical path EP6 and the fourth electrical path EP4. In the third operating frequency band, under control of the processor 44, the first switching circuit S1 may electrically disconnect the sixth electrical path EP6 and the fifth electrical path EP5. In the third operating frequency band, under control of the processor 44, the second switching circuit S2 may electrically connect the sixth electrical path EP6 and the fifth electrical path EP5. In the third operating frequency band, the third point P3 of the side metal 41 may be electrically connected to the antenna ground G by the second switching circuit S2. In the third operating frequency band, under control of the processor 44, the fifth switching circuit S5 may electrically disconnect the thirteenth electrical path EP13 and the fourteenth electrical path EP14. When the wireless communication circuit 43 provides (or feeds) the electromagnetic signal (or, the radio signal, the RF signal, or the radiation current) to the first electrical path EP1, a second signal path through which the electromagnetic signal flows may be formed between the first point P1 electrically connected to the first electrical path EP1 among the side metal 41 and the third point P3 electrically connected to the antenna ground G. When the electromagnetic signal is provided (or fed) from the wireless communication circuit 43 to the first electrical path EP1, an electromagnetic field (also referred to as a radiation field) or a beam pattern of a second resonance frequency corresponding to an electrical length (e.g., a length represented by a ratio of wavelength) possessed by the second signal path may be provided (or formed).

According to various embodiments, the wireless communication circuit 43 may include a first wireless communication circuit 431 and a second wireless communication circuit 432. The first wireless communication circuit 431 may be configured to transmit and/or receive a signal of the first operating frequency band through the antenna structure 1300 including the first side metal 1301, the second side metal 1302, and the conductive pattern 1303. The second wireless communication circuit 432 may be configured to transmit and/or receive a signal of the second operating frequency band and a signal of the third operating frequency band through the first side metal 1301.

According to various embodiments, the electronic device 2 may include the first matching circuit M1, the second matching circuit M2, the third matching circuit M3, the fourth matching circuit M4, the fifth matching circuit M5, and/or an eighth matching circuit M8.

According to various embodiments, the eighth matching circuit M8 may be disposed in the thirteenth electrical path EP13 or may be electrically connected to the thirteenth electrical path EP13. The eighth matching circuit M8 may, for example, be disposed on the first printed circuit board 35 (see FIG. 3). When the thirteenth electrical path EP13 and the fourteenth electrical path EP14 are electrically connected by the fifth switching circuit S5, the sixth point P6 of the second side metal 1302 may be electrically connected to the conductive pattern 1303 through the eighth matching circuit M8.

According to various embodiments, the eighth matching circuit M8 may include an electrical element having components such as inductance, capacitance, or conductance. The eighth matching circuit M8 may include, for example, various elements such as a lumped element or a passive element.

According to various embodiments, the eighth matching circuit M8 may adjust a frequency of the antenna structure 1300 so that resonance may occur in the first operating frequency band. The eighth matching circuit M8 may, for example, shift the resonance frequency of the antenna structure 1300 to a designated frequency, or shift the resonance frequency by a designated amount.

According to various embodiments, the eighth matching circuit M8 may provide (or form) impedance matching in the first operating frequency band.

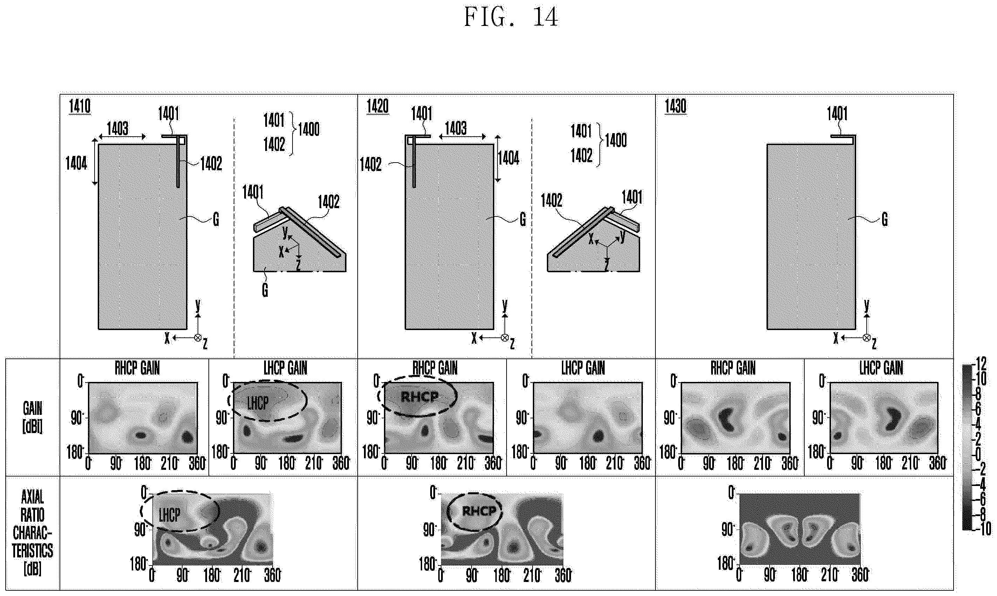

FIG. 14 is a view illustrating an antenna 1410 according to a first embodiment of the present disclosure, an antenna 1420 according to a second embodiment of the present disclosure, and an antenna 1430 according to a comparative example, and heat maps showing gain and axial ratio characteristics of the antennas 1410, 1420, and 1430.

With reference to FIG. 14, the antenna 1410 according to the first embodiment and the antenna 1420 according to the second embodiment may include an antenna structure 1400 and the antenna ground G. The antenna structure 1400 may include a side metal 1401 (e.g., the side metal 41 of FIG. 4), and a conductive pattern 1402 (e.g., the conductive pattern 42 of FIG. 4) electrically connected to the side metal 1401. Based on the drawing, the antenna 1410 according to the first embodiment may be implemented such that the side metal 1401 is positioned at an upper right portion. Based on the drawing, the antenna 1420 according to the second embodiment may be implemented such that the side metal 1401 is positioned at an upper left portion. The side metal 1401 extends in a first direction 1403 (e.g., an x-axis direction), and the conductive pattern 1402 may extend in a second direction 1404 (e.g., a y-axis direction) perpendicular to the first direction 1403. The antenna 1430 according to the comparative example may be one in which the conductive pattern 1402 is omitted compared to the antenna 1410 according to the first embodiment.

According to various embodiments, when an electromagnetic signal (or, a radio signal, an RF signal, or a radiation current) is provided (or fed) to the side metal 1401, the antenna structure 1400 of the antenna 1410 according to the first embodiment radiates a left-handed circular polarized wave (LHCP), and may have polarization characteristics (e.g., gain and axial ratio characteristics) corresponding to the LHCP. The antenna 1410 according to the first embodiment may form the LHCP through combination of the first linear polarized wave radiated from the side metal 1401 and the second linear polarized wave radiated from the conductive pattern 1402 during feeding.

According to various embodiments, when an electromagnetic signal (or, a radio signal, an RF signal, or a radiation current) is provided (or fed) to the side metal 1401, the antenna structure 1400 of the antenna 1420 according to the second embodiment radiates a right-handed circular polarized wave (RHCP), and may have polarization characteristics (e.g., gain and axial ratio characteristics) corresponding to the RHCP. The antenna 1410 according to the first embodiment may form the RHCP through combination of the first linear polarized wave radiated from the side metal 1401 and the second linear polarized wave radiated from the conductive pattern 1402 during feeding.

According to various embodiments, in the antenna 1410 according to the first embodiment and the antenna 1420 according to the second embodiment, the first linear polarized wave radiated from the side metal 1401 may have a first polarized wave direction substantially parallel to the first direction 1403. In the antenna 1410 according to the first embodiment and the antenna 1420 according to the second embodiment, the second linear polarized wave may have a second polarized wave direction substantially parallel to a second direction 1404 perpendicular to the first direction 1403. For example, the first linear polarized wave may be a horizontal polarized wave, and the second linear polarized wave may be a vertical polarized wave. The first linear polarized wave and the second linear polarized wave may have substantially the same amplitude, and a phase difference between the first linear polarized wave and the second linear polarized wave may be substantially 90 degrees.

Compared to the antenna 1410 according to the first embodiment and the antenna 1420 according to the second embodiment, it may be difficult for an antenna 1430 according to the comparative example to have polarization characteristics (e.g., gain and axial ratio characteristics) of a circular polarized wave (e.g., RHCP or LHCP). When an electromagnetic signal (or, a radio signal, an RF signal, or a radiation current) is provided (or fed) to the side metal 1401, a linear polarized wave may be substantially radiated from the side metal 1401 of the antenna 1430 according to the comparative example. In the antenna 1430 according to the comparative example, the linear polarized wave radiated from the side metal 1401 may be a horizontal polarized wave having a polarized wave direction substantially parallel to the first direction 1403.

According to various embodiments, since the antenna 1410 according to the first embodiment and the antenna 1420 according to the second embodiment secure and/or improve the polarization characteristics of the circular polarized wave through the addition of the conductive pattern 1402 compared to the antenna 1430 according to the comparative example, radio wave transmission and reception performance (also referred to as communication performance) may be improved even if the polarization characteristic of the signal transmitted from the signal source, or the orientation (or posture) of the electronic device 2, changes.

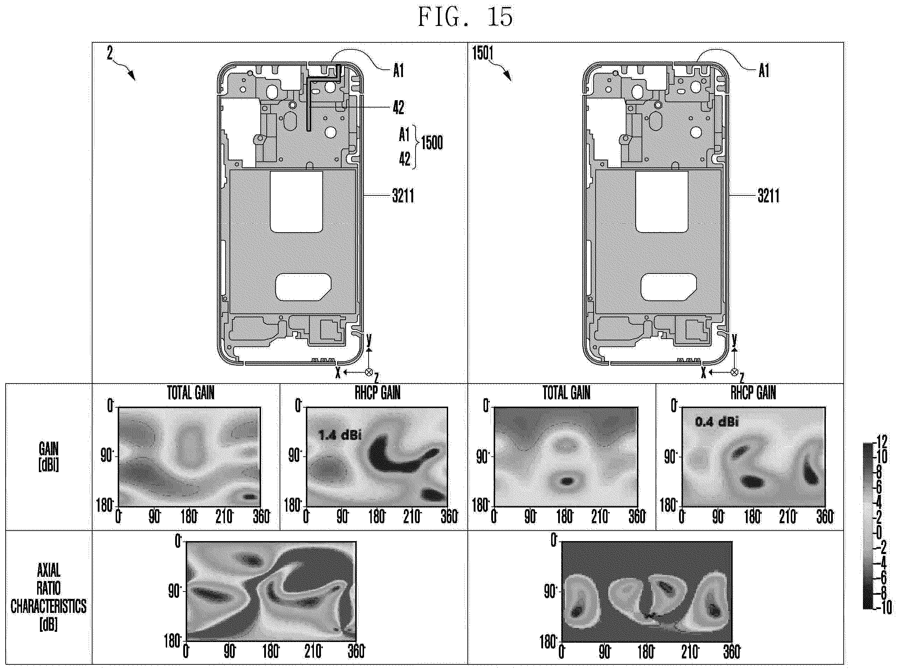

FIG. 15 is a view illustrating a portion of the electronic device 2 according to various embodiments of the present disclosure and a portion of an electronic device 1401 according to the comparative example, and heat maps showing gain and axial ratio characteristics of the electronic devices 2 and 1401.

With reference to FIG. 15, the electronic device 2 according to various embodiments of the present disclosure may include a metal frame 3211 and the conductive pattern 42. The metal frame 3211 may include an integrated or single metal structure including the side metal structure A (see FIG. 2) including the plurality of metals A1, A2, A3, A4, A5, and A6 and the conductor included in the first supporting portion 32 (see FIG. 4). The antenna structure 1500 (e.g., the antenna structure 40 of FIG. 5) may include the first metal A1 of the metal frame 3211, and the conductive pattern 42 electrically connected to the first metal A1. The electronic device 1501 according to the comparative example may be one in which the conductive pattern 42 is omitted compared to the electronic device 2 according to various embodiments of the present disclosure.

According to various embodiments, when an electromagnetic signal (or, a radio signal, an RF signal, or a radiation current) is provided (or fed) to the first metal A1, the antenna structure 1500 of the electronic device 2 according to various embodiments of the present disclosure substantially forms a circular polarized wave (e.g., RHCP) through combination of the first polarized wave radiated from the first metal A1 and the second polarized wave radiated from the conductive pattern 42, and may have gain and axial ratio characteristics corresponding to the circular polarized wave. The antenna structure 1500 of the electronic device 2 according to various embodiments of the present disclosure may have an RHCP gain of a peak value of about 1.4 dBi during feeding.

In the electronic device 1501 according to the comparative example, when the electromagnetic signal (or, the radio signal, the RF signal, or the radiation current) is provided (or fed) to the first metal A1, a polarized wave may be radiated from the first metal A1. Compared to the polarized wave radiated from the antenna structure 1500 of the electronic device 2 according to various embodiments of the present disclosure, it may be difficult for the polarized wave radiated from the first metal A1 to have the polarization characteristics (e.g., gain and axial ratio characteristics) of the circular polarized wave (e.g., RHCP). In the electronic device 1402 according to the comparative example, the first metal A1 may have the RHCP gain of a peak value of about 0.4 dBi during feeding.

Since the electronic device 2 according to various embodiments of the present disclosure secures and/or improves the polarization characteristics of the circular polarized wave through the addition of the conductive pattern 42 compared to the electronic device 1401 according to the comparative example, radio wave transmission and reception performance (also referred to as communication performance) may be improved even if the polarization characteristic of the signal transmitted from the signal source, or the orientation (or posture) of the electronic device 2, changes.

FIG. 16 is a view illustrating a portion of the electronic device 2, and heat maps showing gain and axial ratio characteristics of an antenna structure 1600 according to a relative position of the second point P2 (see FIG. 4) on the first metal A1 with respect to the first point P1 (e.g., a feeding point) on the first metal A1, according to various embodiments of the present disclosure.

With reference to FIG. 16, the electronic device 2 may include the metal frame 3211 and the conductive pattern 42. The antenna structure 1600 (e.g., the antenna structure 40 of FIG. 4) may include the first metal A1 of the metal frame 321, and the conductive pattern 42 electrically connected to the first metal A1.

According to various embodiments, as a distance between the first point P1 (e.g., the feeding point) on the first metal A1 and the second point P2 on the first metal A1 is closer, the electromagnetic wave radiated from the antenna structure 1600 during feeding may have more the polarization characteristics of the circular polarized wave. As the distance between the first point P1 and the second point P2 is closer, the electromagnetic wave radiated from the antenna structure 1600 may have more the polarization characteristics of the circular polarized wave because a current path through which the radiation current provided (or fed) to the first point P1 flows from the first point P1 to the conductive pattern 42 may be reduced. For example, an example (see '0 mm') where the first point P1 and the second point P2 substantially coincide shows that the electromagnetic wave of the polarization characteristics of the circular polarized wave is radiated the most from the antenna structure 1600 during feeding, compared to several examples (see '-10 mm', '-5 mm', '5 mm', '10 mm', and '15 mm') where the first point P1 and the second point P2 are spaced apart by different distances.

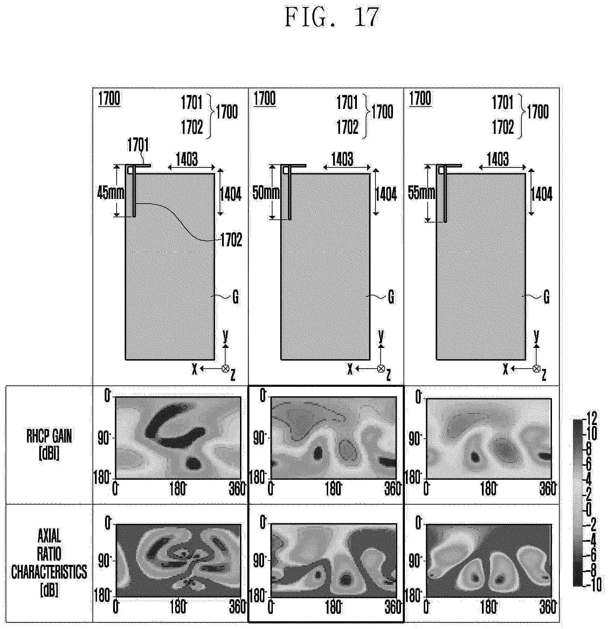

FIG. 17 is a view illustrating an antenna 1700, and heat maps showing gain and axial ratio characteristics of the antenna 1700 according to a length of a conductive pattern 1702, according to various embodiments of the present disclosure.

With reference to FIG. 17, the antenna 1700 may include a side metal 1701 (e.g., the side metal 41 of FIG. 4), the conductive pattern 1702 (e.g., the conductive pattern 42 of FIG. 4), and a ground G (e.g., an antenna ground). Based on the drawing, for example, the antenna 1700 may be implemented such that the side metal 1701 is positioned at an upper left portion. The side metal 1701 extends in the first direction 1403 (e.g., an x-axis direction), and the conductive pattern 1702 is electrically connected to the side metal 1701 and may extend in the second direction 1404 (e.g., a y-axis direction) perpendicular to the first direction 1403.

With reference to several examples (see '45 mm', '50 mm', and '55 mm') in which the length to which the conductive pattern 1702 extends in the second direction 1404 is varied, the polarization characteristics (e.g., gain and axial ratio characteristics) of the circular polarized wave (e.g., RHCP) possessed by the electromagnetic wave radiated from the antenna structure 1700 may be various according to the length of the conductive pattern 1702.

According to various embodiments, when the conductive pattern 1702 has a length substantially corresponding to 1/4 of a wavelength with respect to an operating frequency (also referred to as a used frequency), the electromagnetic wave radiated from the antenna structure 1700 may substantially have the most polarization characteristics of the circular polarized wave. For example, when the conductive pattern 1702 has a length of about 50 mm substantially corresponding to 1/4 of the wavelength with respect to the operating frequency of about 1.6 GHz, the electromagnetic wave radiated from the antenna structure 1700 may substantially have the most polarization characteristics of the circular polarized wave.

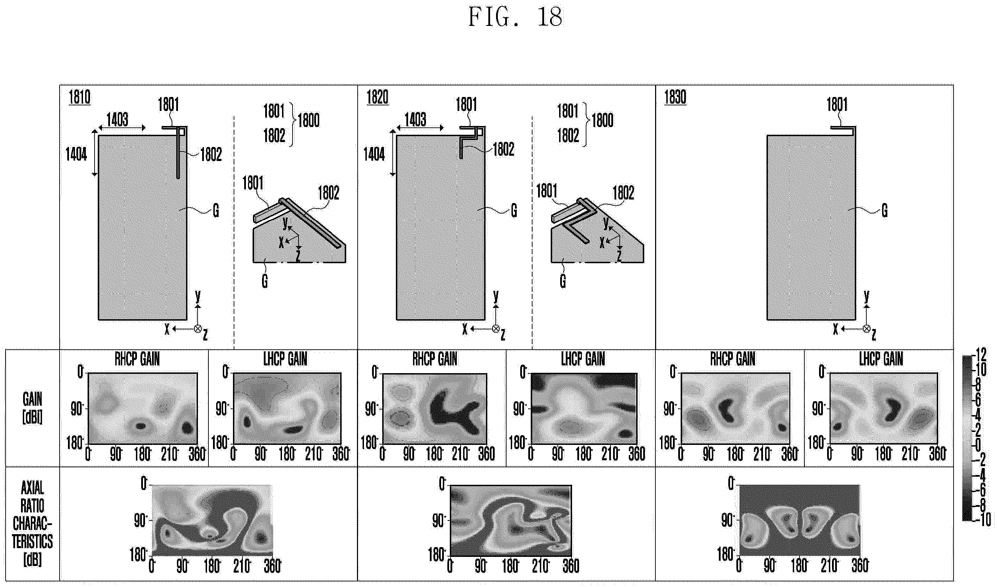

FIG. 18 is a view illustrating an antenna 1810 according to the first embodiment of the present disclosure, an antenna 1820 according to the second embodiment of the present disclosure, and an antenna 1830 according to the comparative example, and heat maps showing gain and axial ratio characteristics of the antennas 1810, 1820, and 1830.

With reference to FIG. 18, the antenna 1810 according to the first embodiment and the antenna 1820 according to the second embodiment may include an antenna structure 1800 and the antenna ground G. The antenna structure 1800 may include a side metal 1801 (e.g., the side metal 41 of FIG. 4), and a conductive pattern 1802 (e.g., the conductive pattern 42 of FIG. 4) electrically connected to the side metal 1801. Based on the drawing, the antenna 1810 according to the first embodiment and the antenna 1820 according to the second embodiment may be implemented such that the side metal 1801 is positioned at an upper right portion. In the antenna 1810 according to the first embodiment and the antenna 1820 according to the second embodiment, the side metal 1801 may extend in the first direction 1403 (e.g., an x-axis direction). In the antenna 1810 according to the first embodiment, the conductive pattern 1802 may extend in the second direction 1404 (e.g., a y-axis direction) perpendicular to the first direction 1403. In the antenna 1820 according to the second embodiment, the conductive pattern 1802 may be formed in a bending shape like the conductive pattern 42 according to the example of FIG. 4. The antenna 1830 according to the comparative example may be one in which the conductive pattern 1802 is omitted compared to the antenna 1810 according to the first embodiment.

According to various embodiments, according to a shape of the conductive pattern 1802, during feeding, a phase difference between the radiation current flowing in the side metal 1801 and the radiation current flowing in the conductive pattern 1802 may vary.

According to various embodiments, when an electromagnetic signal (or, a radio signal, an RF signal, or a radiation current) is provided (or fed) to the side metal 1801, the antenna structure 1800 of the antenna 1810 according to the first embodiment radiates the LHCP, and may have polarization characteristics (e.g., gain and axial ratio characteristics) corresponding to the LHCP. The antenna 1410 according to the first embodiment may form the LHCP through combination of the first polarized wave radiated from the side metal 1801 and the second polarized wave radiated from the conductive pattern 1802 during feeding.

According to various embodiments, when an electromagnetic signal (or, a radio signal, an RF signal, or a radiation current) is provided (or fed) to the side metal 1801, the antenna structure 1800 of the antenna 1820 according to the second embodiment radiates the RHCP, and may have polarization characteristics (e.g., gain and axial ratio characteristics) corresponding to the RHCP. The antenna 1820 according to the second embodiment may form the RHCP through combination of the first polarized wave radiated from the side metal 1801 and the second polarized wave radiated from the conductive pattern 1802 during feeding.

According to various embodiments, when an electromagnetic signal (or, a radio signal, an RF signal, or a radiation current) is provided (or fed) to the side metal 1401, the antenna structure 1400 of the antenna 1420 according to the second embodiment forms the LHCP, and may have gain (e.g., LHCP gain) and axial ratio characteristics corresponding to the LHCP. The antenna 1410 according to the first embodiment may form the LHCP through combination of the first linear polarized wave radiated from the side metal 1401 and the second linear polarized wave radiated from the conductive pattern 1402 during feeding.

According to various embodiments, in the antenna 1410 according to the first embodiment and the antenna 1420 according to the second embodiment, the first linear polarized wave radiated from the side metal 1401 may have a first polarized wave direction substantially parallel to the second direction 1404 perpendicular to the first direction 1403. In the antenna 1410 according to the first embodiment and the antenna 1420 according to the second embodiment, the second linear polarized wave may have a second polarized wave direction substantially parallel to the first direction 1403 perpendicular to the second direction 1404. For example, the first linear polarized wave may be a horizontal polarized wave, and the second linear polarized wave may be a vertical polarized wave. The first linear polarized wave and the second linear polarized wave may have substantially the same amplitude, and a phase difference between the first linear polarized wave and the second linear polarized wave may be substantially 90 degrees.

According to various embodiments, compared to the antenna 1410 according to the first embodiment and the antenna 1420 according to the second embodiment, it may be difficult for the antenna 1830 according to the comparative example to have characteristics (e.g., gain and axial ratio characteristics) of the circular polarized wave (e.g., RHCP or LHCP). When an electromagnetic signal (or, a radio signal, an RF signal, or a radiation current) is provided (or fed) to the side metal 1401, the side metal 1801 of the antenna 1830 according to the comparative example may substantially radiate a linear polarized wave.

According to various embodiments, since the antenna 1810 according to the first embodiment and the antenna 1820 according to the second embodiment secure and/or improve the polarization characteristics of the circular polarized wave through the addition of the conductive pattern 1802 compared to the antenna 1830 according to the comparative example, radio wave transmission and reception performance (also referred to as communication performance) may be improved even if the polarization characteristic of the signal transmitted from the signal source, or the orientation (or posture) of the electronic device 2, changes.

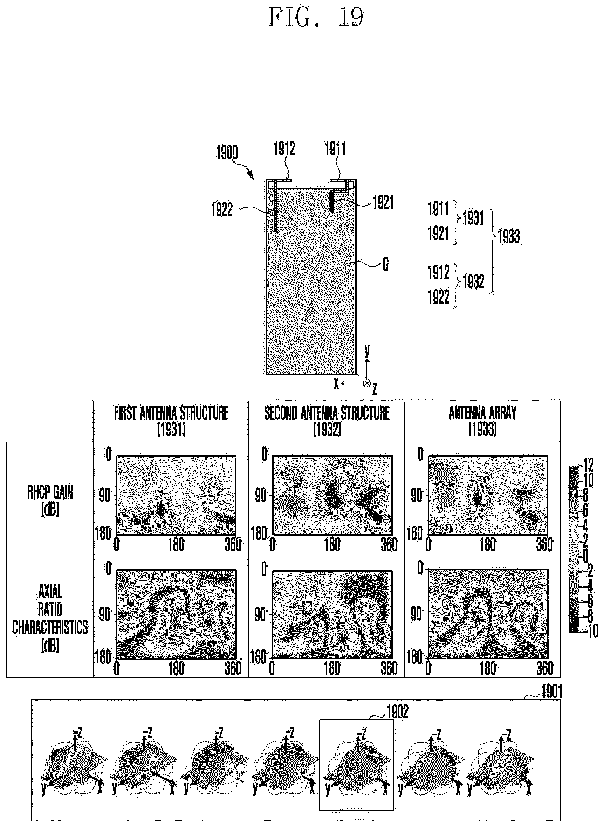

FIG. 19 illustrates a view illustrating an antenna 1900, heat maps showing gain and axial ratio characteristics of the antenna 1900, and beam patterns 1901 of the antenna 1900, according to various embodiments of the present disclosure.

With reference to FIG. 19, the antenna 1900 may include a first side metal 1911, a second side metal 1912, a first conductive pattern 1921, a second conductive pattern 1922, and the antenna ground G. Based on the drawing, the first side metal 1911 is positioned at an upper right portion, and the second side metal 1912 may be positioned at an upper left portion. The first conductive pattern 1921 may be electrically connected to the first side metal 1911. The second conductive pattern 1922 may be electrically connected to the second side metal 1912. A first antenna structure 1931 may include the first side metal 1911 and the first conductive pattern 1921. A second antenna structure 1932 may include the second side metal 1912 and the second conductive pattern 1922.

According to various embodiments, when an electromagnetic signal (or, a radio signal, an RF signal, or a radiation current) is provided (or fed) to the first side metal 1901 , the first antenna structure 1931 may radiate a first polarized wave. The first polarized wave may, for example, have polarization characteristics of a circular polarized wave (e.g., RHCP gain and axial ratio characteristics).

According to various embodiments, when an electromagnetic signal (or, a radio signal, an RF signal, or a radiation current) is provided (or fed) to the second side metal 1902, the second antenna structure 1932 may radiate a second polarized wave. The second polarized wave may, for example, have polarization characteristics of the circular polarized wave (e.g., RHCP gain and axial ratio characteristics).

According to various embodiments, a combination of the first antenna structure 1931 and the second antenna structure 1932 may be an antenna array 1933 configured to transmit and/or receive a signal of a selected or designated frequency band. The antenna array 1933 may form a combined wave in which the first polarized wave radiated from the first antenna structure 1931 and the second polarized wave radiated from the second antenna structure 1932 are combined. 1901 shows various beam patterns in which a first beam pattern of the first polarized wave and a beam pattern of the second polarized wave are combined, according to the polarization characteristics of the first polarized wave radiated from the first antenna structure 1931 and the polarization characteristics of the second polarized wave radiated from the second antenna structure 1932. When the first polarized wave and the second polarized wave are implemented to have optimized polarization characteristics of the circular polarized wave with respect to a propagating direction (or transmission direction) (e.g., a +y-axis direction) of the electromagnetic wave, a combined beam pattern (see 1902) in which the polarization characteristics (e.g., RHCP gain and axial ratio characteristics) of the circular polarized wave are relatively improved with respect to the propagating direction of the electromagnetic wave may be radiated from the antenna array 1933.

According to various embodiments, the electronic device 2 (see FIG. 2) may include a beamforming system (or a beamforming circuit) for the antenna array 1933. The beamforming system may enable receiving a signal with stronger intensity in a desired direction or transmitting the signal in the desired direction, or may prevent receiving a signal coming from an undesired direction. The beamforming system included in the wireless communication circuit (e.g., the wireless communication module 192 of FIG. 1) may adjust a shape or a direction of the beam pattern radiated from the first antenna structure 1931 and the beam pattern radiated from the second antenna structure 1932 by controlling a phase or an amplitude of the electromagnetic signal (or, the radio signal, the RF signal, or the radiation current).

According to various embodiments, the processor (e.g., the processor 120 of FIG. 1) may determine the phase of the electromagnetic signal (or, the radio signal, the RF signal, or the radiation current) provided (or fed) to the first antenna structure 1931 and the second antenna structure 1932 according to a frequency (or a frequency band) used by an application (or a program), based on codebook information regarding beamforming stored in the memory (e.g., the memory 130 of FIG. 1). Through control of the phase, beams may be efficiently controlled (e.g., allocated or arranged) through the first antenna structure 1931 and the second antenna structure 1932.

According to various embodiments, although the present disclosure illustrates a bar-type electronic device 2 (see FIG. 2), it is not limited thereto. A scope of various embodiments of the present disclosure may be applied to a plate-type electronic device, a foldable electronic device, a multi-foldable electronic device, a slidable electronic device, a stretchable electronic device, and/or a rollable electronic device.

According to various embodiments of the present disclosure, the electronic device 2 includes a front plate 21 forming at least a portion of a front surface 20A of the electronic device 2. The electronic device 2 includes a rear plate 22 forming at least a portion of a rear surface 20B of the electronic device 2. The electronic device 2 includes a side 23 forming at least a portion of a side surface of the electronic device 2. The electronic device 2 includes the antenna structure 40. The antenna structure 40 includes a first side metal (e.g., the side metal 41) included in the side 23 and the conductive pattern 42 electrically connected to the first side metal. The electronic device 2 includes the wireless communication circuit 43. The wireless communication circuit 43 is configured to transmit and/or receive a signal of a selected or designated first frequency band through the antenna structure 40. The first side metal radiates a first polarized wave, and the conductive pattern radiates a second polarized wave different from the first polarized wave.

According to various embodiments of the present disclosure, it may be configured such that a circular polarized wave is radiated through the antenna structure 40.

According to various embodiments of the present disclosure, the conductive pattern 42 may be electrically and physically connected to the first side metal (e.g., the side metal 41) through the conductive adhesive material 730.

According to various embodiments of the present disclosure, the conductive pattern 42 may be electrically connected to the first side metal through a flexible conductor (e.g., the second flexible conductor 720) between the conductive pattern 42 and the first side metal (e.g., the side metal 41).

According to various embodiments of the present disclosure, the electronic device 2 may include a printed circuit board (e.g., the first printed circuit board 35) positioned between the front plate 21 and the rear plate 22. The wireless communication circuit 43 may be disposed on the printed circuit board. The first side metal (e.g., the side metal 41) and the conductive pattern 42 may be electrically connected through the printed circuit board.

According to various embodiments of the present disclosure, the wireless communication circuit 43 may be configured to transmit and/or receive a signal of a selected or designated second frequency band through the first side metal (e.g., the side metal 41).

According to various embodiments of the present disclosure, the electronic device 2 may further include a switching circuit (e.g., the first switching circuit S1) between the first side metal (e.g., the side metal 41) and the conductive pattern 42. In the selected or designated first frequency band, the switching circuit may be controlled to electrically connect the first side metal and the conductive pattern 42. In the selected or designated second frequency band, the switching circuit may be controlled to electrically connect the first side metal and the antenna ground G included in the electronic device 2.

According to various embodiments of the present disclosure, in the selected or designated first frequency band, the conductive pattern 42 may be electrically connected to the first side metal (e.g., the side metal 41) through a first matching circuit (e.g., the fourth matching circuit M4). In the selected or designated second frequency band, the first side metal may be electrically connected to the antenna ground G through a second matching circuit (e.g., the fifth matching circuit M5).

According to various embodiments of the present disclosure, the wireless communication circuit 43 may be configured to transmit and/or receive a signal of a selected or designated third frequency band through the conductive pattern 42.

According to various embodiments of the present disclosure, the electronic device 2 may further include a switching circuit (e.g., the first switching circuit S1) between the first side metal (e.g., the side metal 41) and the conductive pattern 42. In the selected or designated first frequency band, the switching circuit may be controlled to electrically connect the first side metal and the conductive pattern 42. In the selected or designated third frequency band, the switching circuit may be controlled so that the first side metal and the conductive pattern are electrically disconnected.

According to various embodiments of the present disclosure, the antenna structure 1300 may further include the second side metal 1302 included in the side 23. The first side metal 1301 may be electrically connected to the second side metal 1302 through the conductive pattern 1303.

According to various embodiments of the present disclosure, the selected or designated first frequency band may include the frequency band of satellite communication.

According to various embodiments of the present disclosure, the conductive pattern 42 may be disposed on a supporting member (e.g., the second supporting portion 33) positioned between the front plate 21 and the rear plate 22.

According to various embodiments of the present disclosure, the conductive pattern 42 may be disposed on the rear plate 22.

According to various embodiments of the present disclosure, the conductive pattern 42 may be disposed on the printed circuit board (e.g., the first printed circuit board 35) positioned between the front plate 21 and the rear plate 22.

The embodiments disclosed in the present disclosure and illustrated in the drawings are provided as particular examples for more easily explaining the technical contents according to the present disclosure and helping understand the present disclosure, but not intended to limit the scope of the present disclosure. Accordingly, the scope of the various embodiments of the present disclosure should be interpreted as including alterations or modifications in addition to the disclosed embodiments. Additionally, it will be understood that any embodiment(s) described herein may be used in conjunction with any other embodiment(s) described herein. Additionally, it will be understood that any embodiment(s) described herein may be used in conjunction with any other embodiment(s) described herein. In particular, the present disclosure has been presented in a form of providing a plurality of embodiments respectively defining a plurality of features, but it is emphasized that some among these embodiments are connected only by reference to the same drawing or drawings. The present disclosure should be understood as including all combinations of these embodiments unless there is no clear contradiction between two (or more) embodiments. That is, when features are presented as optional in the present disclosure, all combinations of such optional features are included in the present disclosure.

## Claims

1. An electronic device (2), comprising:
a front plate (21) forming at least a portion of a front surface (20A) of the electronic device (2);
a rear plate (22) forming at least a portion of a rear surface (20B) of the electronic device (2);
a side (23) forming at least a portion of a side surface of the electronic device (2);
an antenna structure (40) comprising a first side metal (41) included in the side (23) and a conductive pattern (42) electrically connected to the first side metal (41); and
a wireless communication circuit (43) configured to transmit and/or receive a signal of a selected or designated first frequency band through the antenna structure (40),
wherein the first side metal (41) radiates a first polarized wave, and the conductive pattern (42) radiates a second polarized wave different from the first polarized wave.

2. The electronic device of claim 1, wherein the antenna structure (40) is configured to radiate a circular polarized wave.

3. The electronic device of claim 1 or claim 2, wherein the conductive pattern (42) is electrically and physically connected to the first side metal (41) through a conductive adhesive material (730).

4. The electronic device of claim 1 or claim 2, wherein the conductive pattern (42) is electrically connected to the first side metal (41) through a flexible conductor (720) between the conductive pattern (42) and the first side metal (41).

5. The electronic device of claim 1 or claim 2, further comprising:
a printed circuit board (35) positioned between the front plate (21) and the rear plate (22) and on which the wireless communication circuit (43) is disposed,
wherein the first side metal (41) and the conductive pattern (42) are electrically connected through the printed circuit board (35).

6. The electronic device according to any one of claims 1 to 5, wherein the wireless communication circuit (43) is configured to transmit and/or receive a signal of a selected or designated second frequency band through the first side metal (41).

7. The electronic device of claim 6, further comprising:
a switching circuit (S1) between the first side metal (41) and the conductive pattern (42),
wherein, in the selected or designated first frequency band, the switching circuit (S1) is controlled to electrically connect the first side metal (41) and the conductive pattern (42), and in the selected or designated second frequency band, the switching circuit (S1) is controlled to electrically connect the first side metal (41) and an antenna ground (G) of the electronic device (2).

8. The electronic device of claim 7, wherein, in the selected or designated first frequency band, the conductive pattern (42) is electrically connected to the first side metal (41) through a first matching circuit (M4), and in the selected or designated second frequency band, the first side metal (41) is electrically connected to the antenna ground (G) through a second matching circuit (M5).

9. The electronic device according to any one of claims 1 to 5, wherein the wireless communication circuit (43) is configured to transmit and/or receive a signal of a selected or designated third frequency band through the conductive pattern (42).

10. The electronic device of claim 9, further comprising:
a switching circuit (S1) between the first side metal (41) and the conductive pattern (42),
wherein, in the selected or designated first frequency band, the switching circuit (S1) is controlled to electrically connect the first side metal (41) and the conductive pattern (42), and in the selected or designated third frequency band, the switching circuit (S1) is controlled so that the first side metal (41) and the conductive pattern (42) are electrically disconnected.

11. The electronic device according to any one of claims 1 to 10, wherein the antenna structure (1300) further comprises a second side metal (1302) included in the side (23), and the first side metal (1301) is electrically connected to the second side metal (1302) through the conductive pattern (1303).

12. The electronic device according to any one of claims 1 to 11, wherein the selected or designated first frequency band comprises a frequency band of satellite communication.

13. The electronic device according to any one of claims 1 to 12, wherein the conductive pattern (42) is disposed on a supporting member (33) positioned between the front plate (21) and the rear plate (22).

14. The electronic device according to any one of claims 1 to 12, wherein the conductive pattern (42) is disposed on the rear plate (22).

15. The electronic device according to any one of claims 1 to 12, wherein the conductive pattern (42) is disposed on the printed circuit board (35) positioned between the front plate (21) and the rear plate (22).
